(19) Europäisches Patentamt / European Patent Office / Office européen des brevets

(11) **EP 3 159 141 B1**

(12) **EUROPEAN PATENT SPECIFICATION**

(45) Date of publication and mention of the grant of the patent:
**30.04.2025 Bulletin 2025/18**

(21) Application number: 15810070.1

(22) Date of filing: 22.06.2015

(51) International Patent Classification (IPC):
C22C 29/08 (2006.01)   B28B 1/30 (2006.01)
B22F 9/02 (2006.01)   B33Y 80/00 (2015.01)
C04B 35/111 (2006.01)   C04B 35/622 (2006.01)
C04B 35/628 (2006.01)   C04B 35/634 (2006.01)
B29B 9/12 (2006.01)   B29B 9/16 (2006.01)
B22F 1/054 (2022.01)   B22F 1/065 (2022.01)
B22F 1/148 (2022.01)   B22F 1/052 (2022.01)
B33Y 70/10 (2020.01)

(52) Cooperative Patent Classification (CPC):
B22F 9/026; B22F 1/052; B22F 1/054; B22F 1/056;
B22F 1/065; B22F 1/148; B28B 1/30; B29B 9/12;
B29B 9/16; B33Y 70/10; B33Y 80/00; C04B 35/111;
C04B 35/622; C04B 35/62802; C04B 35/63488;
(Cont.)

(86) International application number:
PCT/JP2015/067933

(87) International publication number:
WO 2015/194678 (23.12.2015 Gazette 2015/51)

(54) **POWDER MATERIAL**

PULVERMATERIAL

MATÉRIAU EN POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 20.06.2014 JP 2014127767

(43) Date of publication of application:
26.04.2017 Bulletin 2017/17

(73) Proprietor: FUJIMI INCORPORATED
Nishikasugai-gun
Aichi 452-8502 (JP)

(72) Inventor: IBE, Hiroyuki
Kiyosu-shi
Aichi 452-8502 (JP)

(74) Representative: **Grünecker Patent- und Rechtsanwälte PartG mbB Leopoldstraße 4 80802 München (DE)**

(56) References cited:
WO-A1-2009/020130   WO-A1-2010/064696
WO-A1-2013/176058   WO-A2-2015/001241
CN-A- 103 785 860   JP-A- 2006 257 463
JP-A- 2006 321 711   JP-A- 2008 231 527
JP-A- 2015 096 646   US-A1- 2009 321 971
US-A1- 2013 040 065   US-B2- 7 700 060

• Y XIONG ET AL: "PROCESSING AND MICROSTRUCTURE OF WC-CO CERMETS BY LASER ENGINEERED NET SHAPING", 10 September 2008 (2008-09-10), XP055434992, Retrieved from the Internet <URL:https://sffsymposium.engr.utexas.edu/Manuscripts/2008/2008-12-Xiong.pdf>

(52) Cooperative Patent Classification (CPC): (Cont.)
**C22C 29/08;** B22F 10/14; B22F 10/25; B22F 10/28;
B22F 10/36; B22F 12/41; B29B 2009/125;
B29C 64/153; B33Y 10/00; C04B 2235/528;
C04B 2235/5296; C04B 2235/5409;
C04B 2235/5436; C04B 2235/5454;
C04B 2235/549; C04B 2235/6026; C04B 2235/77;
C04B 2235/96; C04B 2235/963; Y02P 10/25

**Description**

[Technical Field]

The present invention relates to a powder material used in powder additive manufacturing and a powder additive manufacturing method. The present application claims priority to Japanese Patent Application No. 2014-127767 filed on June 20, 2014.

[Background Art]

Powder additive manufacturing is a technology that uses a powder material as the molding material, wherein the powder material is bonded or sintered in a thin layer having an outline corresponding to a certain cross section of the object being formed and such layers are successively added to form the three-dimensional (3D) object. This technology requires no molds; and therefore, there is an advantage that a 3D object can be obtained quickly and easily as a geometric model and the like. In the powder additive manufacturing technology, there are roughly two kinds of techniques for forming a thin layer from a powder material.

One of them is beam irradiation in which a powder material is deposited in a thin layer and then irradiated with a beam (a directed energy beam, e.g. a laser beam) as the heat source over a desired cross-sectional shape to sinter the powder material and form a sintered layer (e.g. See Patent Document 1). The beam irradiation method includes selective laser melting, electron beam melting, and the like corresponding to the types of beam used as the heat source.

The other technique is ink-jetting in which a powder material is deposited in a thin layer and then jetted (ink-jetted) with a binder over a desired cross-sectional shape, whereby the powder particles are bonded to form a bonded layer (e.g. See Patent Document 2). Patent Document 7 discloses ceramic powders comprised of nanoparticulate crystallites used to manufacture dental articles. The ceramic powders may include sintering agents, binders and other similar additives to aid in the processing of the ceramic powder into a dental article. Patent Document 8 discloses metal powder for a 3D printer. The 10-50 micron metal powder is formed by agglomerating metal particles of the submicron order through the prilling technology. Patent Document 9 discloses a process for manufacturing of parts made of a metallic, intermetallic or ceramic material, made of a ceramic matrix composite or made of a metal matrix composite with discontinuous reinforcement, especially with ceramic or intermetallic reinforcement, by melting or sintering particles of powder(s) using a high-energy beam. Characteristically, the powder used is a single powder, the particles of which have a sphericity of between 0.8 and 1.0 and a shape factor of between 1 and $\sqrt{2}$, each powder particle having a substantially identical mean composition and the particle size distribution of the particles of said powder is narrowed about the mean diameter d50% value. Patent Document 10 discloses a thermal spray powder of granulated and sintered cermet particles, which contains tungsten carbide or chromium carbide, and a silicon-containing iron-based alloy. The content of the alloy in the thermal spray powder is preferably 5 to 40% by mass. In this case, the alloy contains silicon in a content of 0.1 to 10% by mass. Patent Document 11 discloses a powder comprising ceramic-metal composite particles, characterized in that at least some of the composite particles do not exhibit any fracture point in a stress-strain diagram obtained by applying a compressive load to the particles up to a maximum value of 10mN or more at a loading rate of 15.0mN/s or less. Patent Document 12 discloses a powder for cold spray comprising granulated-sintered cermet particles. The granulated-sintered cermet particles contain 86 to 96 mass% tungsten carbide, and a balance metal such as cobalt, nickel and chromium. The Fisher diameter of tungsten carbide primary particles composing the granulated-sintered cermet particles is 0.05 to 1 $\mu$m, and the average particle diameter of the granulated-sintered cermet particles is 5 to 20 $\mu$m. The crushing strength of the granulated-sintered cermet particles is preferably 50 to 400 MPa. Patent Document 13 discloses a thermal spray powder containing granulated and sintered yttria particles and fine yttria particles, the average particle diameter of the fine yttria particles being no more than 1 $\mu$m. The content of the fine yttria particles in the thermal spray powder is 1,000 to 10,000 ppm by mass. It is preferred that the thermal spray powder be used in applications for forming a thermal spray coating by plasma thermal spraying at atmospheric pressure. Non-Patent Document 1 discloses the application of submicron-sized WC-Co powder and nanostructured WC-Co powder to make thick wall samples by laser engineered net sharping. It was found that decomposition and decarburization of WC was limited during laser deposition. The effects of working distance, laser power, powder feed rate and traverse speed on the microstructure were studied.

The inkjet and beam irradiation technologies have a common process in which a raw power is deposited in a layer. In other words, it is a process where, prior to binding or sintering the powder material, the powder material is supplied to a specific area (e.g. a building area) and the thin layer of the supplied powder material is flattened with a roller or a spatula-shaped part. In this process, if the powder material has poor fluidity (flow properties), it will be difficult to form a thin layer of the powder material uniform and flat (levelled). Among beam irradiation techniques, laser powder deposition includes a process of spraying a powder material to an area subject to laser irradiation. In this process, too, if the powder material has poor fluidity, the thickness of a deposit, etc., cannot be precisely controlled. Such poor powder fluidity may lead to issues such as affecting the quality of the 3D object manufactured, for example, the smoothness and quality of the surface of the 3D object manufactured. Accordingly, in these powder additive manufacturing techniques, powder materials with great fluidity and uniformity are used, and suitable methods are employed for forming thin layers in accordance with the 3D objects to be fabricated.

[Citation List]

[Patent Literature]

[Patent Document 1] Japanese Patent Application Publication No. 2003-245981
[Patent Document 2] Japanese Patent Application Publication No. H6-218712
[Patent Document 3] Japanese Patent Application Publication No. 2001-152204
[Patent Document 4] Japanese Patent Application Publication No. 2004-277877
[Patent Document 5] Japanese Patent Application Publication No. 2006-321711
[Patent Document 6] Japanese Patent Application Publication No. 2008-050671
[Patent Document 7] US 2009/321971 A1
[Patent Document 8] CN 103785860 A
[Patent Document 9] WO 2015/001241 A2
[Patent Document 10] US 2013/040065 A1
[Patent Document 11] WO 2013/176058 A1
[Patent Document 12] JP 2008-231527 A
[Patent Document 13] US 7700060 B2

[Non-Patent Literature]

[Non-Patent Document 1] Y. Xiong et al., "Processing and Microstructure of WC-Co Cermets by Laser Engineered Net Sharping, September 10, 2008

[Summary of Invention]

[Technical Problem]

In conventional powder additive manufacturing techniques, powders formed of resin materials have been used for their great thermal welding and binder-bonding properties. Resin materials are light in weight and their spherical powders can be easily obtained. Thus, it is easy to prepare uniform powder materials with relatively good fluidity (flow properties). For example, Patent Document 5 discloses, as powder material, microparticles used in selective laser sintering; the microparticles are formed of a thermoplastic resin, have an average particle diameter of 1 $\mu$m to 100 $\mu$m, and have surfaces coated partially or entirely with anti-caking particles. However, lately, there is growing demand for direct manufacturing of practical prototypes and products by powder additive manufacturing. Thus, in addition to resin materials, for fabricating objects that are placed in a high temperature environment or required to have a high level of strength, supplies of powders for powder additive manufacturing that are formed of metal materials and ceramic materials have been desired.

For example, Patent Document 3 suggests a metal powder for metal laser sintering, with the metal powder comprising a ferrous powder (chrome-molybdenum steel, alloy tool steels) and at least one species of non-ferrous powder selected from the group consisting of nickel, nickel-based alloys, copper and copper-based alloys. Patent Document 4 provides a powder mixture for metal laser sintering, with the powder mixture formed of a ferrous powder (chrome-molybdenum steel), powdered nickel and/or nickel-based alloy, powdered copper and/or copper-based alloy, and graphite powder. These technologies are aimed to improve powder compositions so as to solve problems related to the strength, toughness and workabilities of 3D objects as well as the wettability, fluidity, etc., of the powder materials when melted.

From the standpoint of the uniformity, Patent Document 6 discloses a metal powder for metal laser sintering, alloyed by a mechanical alloying method from a powder composition comprising nickel powder, copper powder and graphite carbon powder. With respect to this metal powder for metal laser sintering, in the alloying process, the particle diameters and specific gravity of the powder particles become relatively uniform. However, it lacks sufficient fluidity and further improvement has been in need. In particular, in applications in which surface smoothness and quality surfaces are desired, conventional powder materials have been unlikely to fulfill the desire.

The present invention has been made in view of such circumstances with an objective to provide a highly fluid powder material (building material) for powder additive manufacturing. Another objective of this invention is to provide a method for forming a 3D object using the powder material.

[Solution to Problem]

The scope of the present invention is defined by independent claims 1 and 5, and further embodiments of the invention are specified in dependent claims 2-4.

[Effects of Invention]

The present invention can provide a highly fluid powder material for use in powder additive manufacturing.

[Brief Description of Drawings]

Fig. 1 shows an outline of a system for powder additive manufacturing according to an embodiment.
Fig. 2 shows an example of scanning electron microscope (SEM) images of secondary particles forming the powder material according to an embodiment.

[Description of Embodiments]

<Definitions>

As premises, the following terms, as used herein, are defined as follows.
As used herein, the term "powder material" refers to a material that is used for powder additive manufacturing and is in a powder form. The powder material is typically formed with the later-described secondary particles gathered together. It is needless to say that the later-described primary particles are allowed to be mixed in.
As used herein, the term "primary particle" means the smallest entity that can be identified as a particulate from its appearance among the structural components forming the powder material. In particular, it refers to a particle (a particulate) forming the secondary particle described later.
As used herein, the term "secondary particle" refers to a particulate (a substance in a particle form) in which the primary particles are bound three-dimensionally to form a body and behave as a single particle.
The term "bound" as used herein refers to direct or indirect bonding between two or more primary particles. For instance, it encompasses chemical bonding between primary particles, simple cohesive bonding of primary particles attracting each other, bonding by the anchoring effects of an adhesive or the like to fill surface depressions of primary particles, bonding between primary particles by the effects of static attraction, bonding resulting from surface melting and fusion of primary particles, and so on.
As used herein, the term "raw particles" refer to particles forming a raw powder used for forming a powder material. Raw particles can be three-dimensionally bound by a suitable method to produce secondary particles. The particles forming secondary particles produced in such a way are referred to as primary particles. The primary particles may have almost the same appearance (form) as the raw particles, or may have different appearance from the raw particles due to a reaction between two or more raw particles, fusion of raw particles to a level where they cannot be structurally differentiated, etc. The primary particles may have the same composition as the raw particles or may have a different composition from the raw particles due to a reaction between two or more types of raw particles.
As used herein, the "flattening step" in powder additive manufacturing refers to a step in which a powder material is supplied to the building area of an arbitrary powder additive manufacturing system so that it is deposited evenly thinly with a constant thickness. In general, powder additive manufacturing is carried out in the following steps:

(1) a step of supplying a powder material to the building area of a powder additive manufacturing system,
(2) a step of forming a thin layer by flattening the supplied powder material with a wiper or the like so that it is deposited evenly thinly in the building area,
(3) a step of solidifying the powder material by means of bonding or sintering the thin layer of the powder material formed,
(4) supplying a fresh portion of the powder material over the solidified powder material (step (1) above) and then repeating the steps (2) to (4) to layer deposits so as to obtain a desired 3D object.

In other words, the "flattening step" as used herein primarily refers to, in the step (2), the step of obtaining a thin layer by depositing the powder material evenly thinly over the building area. The "solidifying" encompasses solidifying a secondary particles making up the powder material into a certain cross-sectional shape by bonding the secondary particles directly by means of melting and solidification or indirectly via a binder.

<Method for measuring average particle diameter of powder material>

As used herein, the "average particle diameter" with respect to the powder material (typically secondary particles) means, the 50th percentile particle diameter (volume median particle diameter, D50) in its size distribution by volume measured by a particle size analyzer based on laser diffraction/scattering spectroscopy.

<Method for measuring average particle diameter of primary particles>

As used herein, the "average particle diameter" with respect to the primary particles of the powder material is the value determined as the diameter of spherical particles (equivalent spherical diameter). When the powder material has a total specific surface area Sm and a density $\rho$, the average particle diameter (Dave) of the primary particles can be determined based on the equation shown below. It is noted that when the powder material is produced from a mixture of several species of raw particles, for the density, their weighted sum (the sum of the densities of the several secondary materials added in accordance with their proportions) can be used.

$$\text{Dave} = 6/(\rho\,\text{Sm})$$

<Method for measuring specific surface area>

As used herein, the "specific surface area" means the value of total (external and internal) surface area of particles making up the powder material divided by its mass, determined by measuring the amount of gas (typically nitrogen gas ($N_2$)) physically adsorbed on the surface of the powder material. The specific surface area can be measured based on "Determination of the specific surface area of powders (solids) by gas adsorption-BET method" in JIS Z 8830:2013 (ISO 9277:2010).

<Method for measuring particle size range>

As used herein, the particle size distribution of a powder material shows what sizes (particle diameters) of particles are contained in what proportions (relative amounts of particles with the total of the powder material being 100 %) in the group of particles making up the powder material. The "particle size range" is an index that indicates the particle diameter range (span) between upper and lower limits with respect to the powder material. The lower limit of a particle size range as used herein indicates that, in the powder material, the proportion of particles having particle diameters up to that particular value is 5 % or lower. The upper limit of a particle size range as used herein indicates that, in the powder material, the proportion of particles having particle diameters of at least that particular value is 5 % or lower. The particle size distribution of a powder material can be determined by a particle size analyzer suited for the particle sizes of the powder material. For example, it can be determined by a Ro-Tap shaker (Rotation-Tapping shaker, see JIS R6002) or an analytical instrument employing laser diffraction/scattering spectroscopy. For instance, with respect to a powder material having a particle size range of 5 $\mu$m to 75 $\mu$m, it means that the proportion of particles having particle diameters up to 5 $\mu$m is 5 % or lower and the proportion of particles having particle diameters of 75 $\mu$m or larger is 5 % or lower.

<Method for measuring average particle diameter of raw powder>

As used herein, the "average particle diameter" of raw particles is measured fundamentally based on laser diffraction/scattering spectroscopy, similarly to the powder material. However, for instance, with respect to a group of particles having an average particle diameter smaller than 1 $\mu$m, the average particle diameter is determined based on the specific surface area in accordance with the method for measuring the average particle diameter of primary particles described above.

<Method for measuring roundness>

As used herein, the "roundness" of a powder material means the arithmetic mean roundness value determined with respect to plan-view images (e.g. secondary electron images, etc.) of 100 or more secondary particles obtained by analytical means such as an electron microscope. In a plan-view image of a secondary particle, the roundness is the value defined with the perimeter (circumferential length) of the secondary particle and the surface area inside the perimeter by the equation shown below. The roundness is an index that is likely to reflect the surface smoothness of a secondary particle; for a geometric circle (perfect circle), roundness = 1. The roundness deviates from the perfect circle as it increases above 1. The mean roundness can be determined, for instance, by analyzing electron microscope images obtained at a suitable magnification with image processing software or the like.

$$\text{Roundness} = \text{perimeter}^2 \div (4 \times \pi \times \text{surface area})$$

<Method for measuring aspect ratio>

As used herein, the "aspect ratio" means the arithmetic mean aspect ratio value determined with respect to plan-view images (e.g. secondary electron images, etc.) of 100 or more secondary particles obtained by analytical means such as an electron microscope. The aspect ratio is defined as a/b wherein a is the long axis length and b is the short axis length of the equivalent oval of the secondary particle. The equivalent oval is an oval having equal surface area as well as equal first and second moments as the secondary particle. The aspect ratio can be determined, for instance, by analyzing electron microscope images obtained at a suitable magnification with image processing software or the like.

<Method for determining fractal dimension>

As used herein, the "fractal dimension" means the arithmetic mean fractal dimension determined with respect to plan-view images (e.g. secondary electron images, etc.) of 100 or more secondary particles obtained by analytical means such as an electron microscope. In the present description, for the fractal dimension, the value determined by the divider method is used; it is defined as the slope of the linear portion of the function relating logarithms of perimeter and stride length of a secondary particle in a plan-view image of the secondary particle. The fractal dimension value is measured to be 1 (= solid line) or greater, but less than 2 (= flat surface), meaning that the closer it is to 1, the smoother the secondary particle surface is. The mean fractal dimension can be determined, for instance, by analyzing electron microscope images obtained at a suitable magnification with image processing software or the like.

<Method for measuring angle of repose>

As used herein, the "angle of repose" means the base angle determined from the diameter and height of a cone of deposits formed when a powder material is dropped through a funnel at a certain height onto a horizontal base plate. The angle of repose can be determined based on "Alumina powder - Part 2: Determination of physical properties - 2: Angle of repose," JIS R 9301-2-2:1999.

<Method for measuring flow function>

As used herein, the "flow function" is the so-called relative flow index (RFI) value determined as follows: a prescribed amount of a powder material is placed in a container with 50 mm inner diameter; while the powder material is subjected to a shear force of 9 kPa at normal temperature/humidity, the maximum principal stress and unconfined yield stress are measured; and the resulting maximum principal stress is divided by the resulting uniaxial yield stress to determine the flow function. It means that the larger the flow function is, the more fluid the powder material is.

<Method for measuring compressive strength>

As used herein, the compressive strength with respect to a powder material is measured, using an electromagnetic loading compression tester. In particular, a measurement sample is fixed between a pressure indenter and a pressure plate and subjected to an electromagnetic load increasing at a constant rate. It is compressed at a constant load rate; during this, the degree of deformation of the measurement sample is measured. The data on deformation characteristics of the measured sample are processed by a special program to determine the strength value.

An embodiment of the present invention is described below. The present invention is not limited to the embodiment described below. The dimensional ratios in the drawings are exaggerated for illustration purposes and may be different from actual ratios. As used herein, "X to Y" indicating a range means that it is "X or greater, but Y or less." "Weight," "% by weight" and "parts by weight" are treated as synonyms of "mass," "% by mass" and "parts by mass."

The powder material for powder additive manufacturing in the present invention is formed of particles having a form of secondary particles that are formed with primary particles bound three-dimensionally with some interspaces (hereinafter, "particles having a form of secondary particles that are formed with primary particles bound three-dimensionally with some interspaces" are referred to as simply "secondary particles"). Being "formed of" as used herein means that the powder material for powder additive manufacturing primarily composes the secondary particles described above. The term "primarily" indicates that the secondary particles account for 90 % by mass or more of the powder material, preferably 95 % by mass or more, or more preferably 98 % by mass or more.

Examples of the powder additive manufacturing in this embodiment include beam irradiation methods such as laser powder deposition (laser metal deposition, LMD), selective laser melting (SLM), and electron beam melting (EBM) as well as inkjet technologies in which a binder is jetted to form a layer of bonded powder particles.

In particular, laser metal deposition is a technology in which a powder material is provided to a desired part of a structure and subjected to irradiation of laser light to melt and solidify the powder material, whereby the part is provided with a deposit. By employing this technology, for instance, when physical degradation such as frictional wearing occurs in the structure, the material constituting the structure or a reinforcing material is supplied as the powder material to the degraded part, and the powder material is melted and solidified to provide a deposit to the degraded part, etc.

Selective laser melting is a technology in which based on slice data generated from a design, a powder layer as a deposit of a powder material is scanned with laser light to melt and solidify the powder layer into a desirable shape and this procedure is repeated for every cross section (each slice data) to build up layers, whereby a 3D structure is created. Electron beam melting is a technique in which based on slice data generated from 3D CAD data, the powder layer is selectively melted and solidified by electron beam and such layers are built up to create a 3D structure. Each of the technologies includes a step of supplying a powder material to a prescribed building area, with the powder material being the raw material of the structure. Especially, in selective laser melting and electron beam melting, it is necessary to repeat the flattening step to deposit layers of the powder material evenly, thinly over the entire building area to create a structure, with each layer having a thickness corresponding to the thickness of a cross section. In the step of flattening the powder material, the fluidity of the powder material is an important parameter and greatly affects the finish (finished texture) of the resulting 3D object. With respect to this, the powder material for powder additive manufacturing in the present disclosure has good fluidity; and therefore, a well-finished 3D object can be fabricated.

The powder material in this embodiment is primarily formed of particles having a form of secondary particles which are formed with primary particles that are bound three-dimensionally with some interspaces. With particles having such a form, the fluidity significantly increases as compared to powder materials (each being a group of a single species of raw particles) that have been used in conventional powder additive manufacturing. When the particles are monodispersed raw particles as conventionally used in powder additive manufacturing, if the average particle diameter is small, the fluidity tends to decrease with increasing interparticle contact area. With respect to the powder material in the disclosure, even if the primary particles have a small average particle diameter, because the primary particles form secondary particles, good fluidity can be obtained corresponding to the average particle diameter of the secondary particles. With the small average primary particle diameter of the material, some effects can be obtained such as a smaller surface roughness (Ra) of a 3D object created and increased dimensional accuracy. In addition, since the powder material in this disclosure includes interspaces, the efficiency of solidifying the powder material increases in the manufacturing. In particular, when a heat source is used for the solidification, because the powder material in this disclosure includes interspaces, the powder material readily conducts heat and easily melts. As a result, spaces between secondary particles are lost and a 3D object can be fabricated nearly as highly compact and highly hard as a sintered body (bulk body) produced with a conventional mold.

The powder material is obtained as granulated sintered particles.

<Method for producing powder material>

The powder material in this embodiment is particles having a form of secondary particles that are formed with primary particles bound three-dimensionally with some interspaces. Its production method is not particularly limited as long as such a form can be obtained. A granulation/sintering method is described next as an example; however, the method for producing the secondary particles in this embodiment is not limited to this.

The granulation/sintering method is a technique in which raw particles are granulated into a form of secondary particles and then tightly bonded (sintered) to one another. In the granulation/sintering method, granulation can be carried out, for instance, by a granulation method such as dry granulation and wet granulation. Specific examples of the granulation method include rotational granulation, fluidized bed granulation, high shear granulation, crushing granulation, melt granulation, spray granulation, and micro-emulsion granulation. Spray granulation is cited as a particularly favorable granulation method.

By spray granulation, for instance, the powder material can be produced in the following procedures. Raw particles having a desirable composition is obtained first and the surface is further stabilized as necessary with a protecting agent, etc. The stabilized raw particles are then dispersed in a suitable solvent along with, for instance, a binder and spacer particles formed of an organic material which are included as necessary, thereby to obtain a spray formula. The raw particles can be dispersed in the solvent, using, for instance, a homogenizer, mixer such as blade mixer, disperser, etc. The spray formula is sprayed with an ultrasonic sprayer and the like to form mist. For instance, the mist is passed with air through a continuous oven. While carried through the continuous oven, the mist is dried and the solvent is removed in a low-temperature zone placed relatively upstream in the oven and subsequently sintered in a high-temperature zone placed relatively downstream in the oven. During this, the granulated raw particles are sintered (fused) at their contact points, generally maintaining their granular shapes. By this, a powder material can be obtained, formed of particles having a form of secondary particles which are formed with primary particles bonded with some interspaces. Here, the primary particles may be approximately equivalent in size and shape to the raw particles, or the raw particles may undergo growth and bonding when sintered.

In the production processes, when the mist is dry, the raw particles and binder are uniformly mixed and the raw particles are bonded with the binder, forming a powder mixture. In a system using spacer particles, the raw particles and spacer particles are uniformly mixed and bonded with a binder, forming a powder mixture. When the powder mixtures are sintered, the binder (and the spacer particles) is lost (eliminated by combustion) and the raw particles are sintered to form secondary particles in which the primary particles are bonded with interspaces. During the sintering, some of the raw particles may be in a liquid state depending on the composition and the size to contribute to bonding of other particles. Accordingly, the primary particles may have a larger average particle diameter than the raw particles as the starting material. From the drying process through the sintering process, due to the loss of other components besides the raw particles and shrinkage of the raw particles during sintering, the resulting secondary particles have a significantly smaller average particle diameter than the size of the mist droplets. The average particle diameters of the secondary particles and primary particles as well as the size and proportion of interspaces formed between the primary particles can be suitably designed in accordance with the desired form of the secondary particles.

In the production procedures, the concentration of the raw particles in the spray formula is preferably 10 % to 40 % by mass. Examples of the added binder include carboxymethyl cellulose, polyvinyl pyrrolidone, and polyvinyl pyrrolidone. The binder is preferably added in an amount of 0.05 % to 10 % by mass of the raw particles. The environment for the sintering is not particularly limited. It can be in the air, in vacuum, or in an inert gas atmosphere. The sintering temperature is preferably 600 °C or higher, but 1600 °C or lower. In particular, when using spacer particles, binder, etc., formed of an organic material and the like, sintering may be carried out in an atmosphere with oxygen so that the organic materials are removed from the granulated particles. As necessary, the produced secondary particles may be crushed and sifted.

<Composition/Constitution>

In the powder material, the constitution (composition) of the secondary particles suitably selected in accordance with the 3D object to be fabricated. Examples include secondary particles formed of a metal, alloy, ceramic or cermets.

For example, secondary particles of a cermet are formed with ceramic primary particles and metal primary particles that are three-dimensionally bonded with interspaces, and can be obtained from a mixture of ceramic raw particles and metal raw particles. The constitution (composition) of these secondary particles depends on the selection of the raw particles.

The composition of the raw particles suitably selected in accordance with the powder material (secondary particles) to be produced. Examples of the material include a metal, alloy, ceramic or cermets.

Examples of the resin include crosslinked resins, thermoplastic resins and heat-curable resins. In particular, crosslinked resin particles can be synthesized by known methods (emulsion polymerization, dispersion polymerization, suspension polymerization) described in "New Development in Nanoparticles and Ultrafine Particles" (Toray Research Center, Inc.), "Practical Applications of Ultrafine Polymer Particles" (CMC (editorial supervisor, Soichi Munei)), "Techniques and Applications of Polymeric Microparticles"(CMC (editorial supervisors, Shinzo Omi, et al.)) and the like. The "crosslinked resin particles" refer to synthetic resin particles having internal cross-linking chemical bonds (cross links). The cross-linking chemical bonds can be formed with the use of a crosslinking agent having at least two reactive groups per molecule. The crosslinking agent can be in a form of a monomer, oligomer or polymer. Crosslinked resin particles can be produced by addition polymerization of a polyfunctional monomer or synthesis of polyurethane using a tri- or higher functional polyol and/or a tri- or higher functional polyisocyanate. It is also possible to carry out addition polymerization of a (meth)acrylic acid having a functional group (glycidyl group, hydroxy group, activated ester group, etc.) and then a crosslinking reaction with the functional group. The crosslinked resin particles have intra-particle cross-links. It is preferable that the particles have cross-links on their surfaces, but are free of interparticle chemical bonds. The crosslinked resin particles usable in this disclosure may be swollen, but will not dissolve in water or commonly-used organic solvents (e.g. alcohols (e.g. methanol, ethanol, propanol, butanol, fluorinated alcohols, etc.), ketones (e.g. acetone, methyl ethyl ketone, cyclohexanone, etc.), carboxylic acid esters (e.g. methyl acetate, ethyl acetate, propyl acetate, butyl acetate, methyl propionate, ethyl propionate, etc.), ethers (e.g. diethyl ether, dipropyl ether, tetrahydrofuran, dioxane, etc.), and halogenated hydrocarbons (e.g. methylene chloride, chloroform, carbon tetrachloride, dichloromethane, methyl chloroform, etc.)). The crosslinked resin particles usable as the raw particles in this disclosure are preferably obtained by polymerization of a composition comprising at least one species of polyfunctional ethylenic unsaturated compound. As the polyfunctional ethylenic unsaturated compound, that is, the polyfunctional monomer, bifunctional to tetrafunctional monomers are preferable. Bifunctional and trifunctional monomers are more preferable. Crosslinked particles cannot be obtained in polymerization of a monofunctional monomer alone. Crosslinking with a bifunctional to tetrafunctional monomer can prevent aggregation of resin particles and the particle size distribution of the crosslinked resin particles can be kept narrow. In this disclosure, the crosslinked resin particles are preferable obtained by polymerization of a composition comprising two or more species of polyfunctional ethylenic unsaturated compounds. It is also preferable that at least one of polyfunctional ethylenic unsaturated compound has two or more ethylenic unsaturated compounds. As the polyfunctional monomer having two or more ethylenic unsaturated bonds, a polyfunctional ethylenic unsaturated compound having at least both a (meth)acryloyl group and an allyl group. As for the polymerization method used in producing the crosslinked resin particles, the crosslinked resin particles of interest can be obtained by suspension polymerization in which a hydrophobic polyfunctional/monofunctional monomer mixture is suspended in water, dispersion polymerization in which the mixture is dispersed in a suitable medium, emulsion polymerization in which the mixture is emulsified in water, or dispersion polymerization in a solution obtained by adding the monomer mixture and a poor solvent for the resulting polymer. When crosslinked resin particles are used as the raw particles in this disclosure, the crosslinked resin particles are formed preferably by dispersion polymerization or suspension polymerization, or more preferably by dispersion polymerization. Crosslinked resin particles having particle diameters of 1 $\mu$m to 50 $\mu$m can be produced by thermal polymerization of a monofunctional (meth)acrylic acid ester and a bifunctional acrylic acid ester in a methanol/ethylene glycol mixture. In the polymerization, an emulsifier and a dispersion stabilizer can be suitably used. Examples of the dispersion stabilizer include polyvinyl alcohol and polyvinyl pyrrolidone (PVP).

The thermoplastic resin refers to a synthetic resin that provides a level of thermosplasticity that allows thermal molding. As used herein, the "thermosplasticity" refers to properties to reversibly soften when heated to allow for plastic deformation and reversibly harden when cooled. In general, a resin having a chemical structure formed with a linear or branched polymer can be considered. Specific examples include commonly-used resins such as polyvinyl chloride (PVC), polyethylene (PE), polypropylene (PP), polystyrene (PS), thermoplastic polyesters, acrylonitrile-butadiene-styrene (ABS), acrylonitrile-styrene (AS), polymethylmethacrylate (PMMA), polyvinyl alcohol (PVA), polyvinylidene chloride (PVDC), polyethylene terephthalate (PET), and polyvinylacetate; engineering plastics such as polyamide (PA), polyacetal (POM), polycarbonate (PC), polyphenylene ether (PPE), modified polyphenylene ether (or m-PPE;m-PPO), polybutylene terephthalate (PBT), ultra-high molecular weight polyethylene (UHPE), and polyvinylidene fluoride (PVdF); and super engineering plastics such as polysulfone (PSF), polyether sulfone(PES), polyphenylene sulfide (PPS), polyarylate (PAR), polyamide imide (PAI), polyether imide (PEI), polyether ether ketone (PEEK), polyimide (PI), liquid crystal polymer (LCP), and polytetrafluoroethylene (PTFE). Among them, preferable examples include resins such as polyvinyl chloride; polycarbonate; polyalkylene terephthalates typified by PET, PBT, etc.; and polymethyl methacrylate. Among these, any one species can be used solely or a combination of two or more species can be used as well.

The heat-curable resin refers to a synthetic resin that undergoes polymerization with formation of a polymeric network and irreversibly cures when heated. As used herein, the "heat curability" refers to curing properties such that a reaction occurs in the polymer, whereby crosslinking occurs to form a network. Specific examples include phenolic resin (PF), epoxy resin (EP), melamine resin (MF), urea resin (UF), unsaturated polyester resin (UP), alkyd resin, polyurethane (PUR), and heat-curable polyimide (PI). Among them, resins such as phenolic resin, epoxy resin and polyurethane resin are preferable. The heat-curable resin can be present as, for instance, a mixture of low molecular weight monomers or a polymer formed upon a certain degree of polymerization (partial polymerization). These can be used singly as one species or in a combination (including a blend) of two or more species.

Examples of the metal and alloy include aluminum (Al), aluminum alloys, iron (Fe), steel, copper (Cu), copper alloys, nickel (Ni), nickel alloys, gold (Au), silver (Ag), bismuth (Bi), manganese (Mn), zinc (Zn), zinc alloys, titanium (Ti), chromium (Cr), molybdenum (Mo), platinum (Pt), zirconium (Zr) and iridium (Ir). These can be used singly as one species or in a combination of two or more species.

Examples of the ceramic include ceramic materials formed of oxides (oxide-based ceramic materials) and ceramic materials formed of non-oxides such as carbides, borides, nitrides, and apatites.

The oxide-based ceramic is not particularly limited and can be oxides of various metal species. The metal(s) forming the oxide-based ceramic can be, for example, one, two or more species selected among metalloids such as B, Si, Ge, Sb, and Bi; typical elements such as Mg, Ca, Sr, Ba, Zn, Al, Ga, In, Sn, and Pb; transition metals such as Sc, Y, Ti, Zr, Hf, V, Nb, Ta, Cr, Mo, W, Mn, Fe, Co, Ni, Cu, Ag, and Au; and lanthanoids such as La, Ce, Pr, Nd, Sm, Er, and Lu. In particular, one, two or more species selected among Mg, Y, Ti, Zr, Cr, Mn, Fe, Zn, Al, and Er are preferable.

More specific examples of the oxide-based ceramic include alumina, zirconia, yttria, chromia, titania, cobaltite, magnesia, silica, calcia, ceria, ferrite, spinel, zircon, nickel oxide, silver oxide, copper oxide, zinc oxide, gallium oxide, strontium oxide, scandium oxide, samarium oxide, bismuth oxide, lanthanum oxide, lutetium oxide, hafnium oxide, vanadium oxide, niobium oxide, tungsten oxide, manganese oxide, tantalum oxide, terbium oxide, europium oxide, neodymium oxide, tin oxide, antimony oxide, antimony-containing tin oxide, indium oxide, tin-containing indium oxide, zirconium oxide aluminate, zirconium oxide silicate, hafnium oxide aluminate, hafnium oxide silicate, titanium oxide silicate, lanthanum oxide silicate, lanthanum oxide aluminate, yttrium oxide silicate, titanium oxide silicate, and tantalum oxide silicate.

Examples of the non-oxide-based ceramic include carbides such as tungsten carbide, chromium carbide, vanadium carbide, niobium carbide, molybdenum carbide, tantalum carbide, titanium carbide, zirconium carbide, hafnium carbide, silicon carbide, and boron carbide; borides such as molybdenum boride, chromium boride, hafnium boride, zirconium boride, tantalum boride, and titanium boride; nitrides such as titanium nitride, silicon nitride, and aluminum nitride; composite compounds such as forsterite, steatite, cordierite, mullite, barium titanate, lead titanate, lead zirconate titanate, Mn-Zn ferrite, Ni-Zn ferrite, and sialon; phosphate compounds such as hydroxyapatite and calcium phosphate. Of these, any species can be used singly or two or more species can be used in combination.

Of these raw particles, solely one species may form the secondary particles, or two or more species may be combined to form the secondary particles. For example, when two or more species of raw particles are in the secondary particles, part or all of them may be present as a composite. For instance, when the raw particles are of a ceramic material, specific examples of such composite secondary particles include yttria-stabilized zirconia, partially-stabilized zirconia, gadolinium-doped ceria, and lanthanum-doped lead zirconate titanate as well as the sialon and composite oxides described earlier. Using a powder material formed of such a composite compound, an object formed of the composite compound can be fabricated. When two or more species of raw particles are not present as a composite, but form secondary particles (a powder material) as a mixture, the use of the powder material allows for fabrication of an object formed of a composite formed from part or all of the raw particles.

<Average particle diameter of powder material>

The powder material may have an average particle diameter suited for its supply in the flattening step in powder additive manufacturing. The upper limit of the average particle diameter (by volume) of the secondary particles is 100 $\mu$m or smaller, preferably 75 $\mu$m or smaller, more preferably 50 $\mu$m or smaller, or yet more preferably 35 $\mu$m. With decreasing average particle diameter of the secondary particles, for instance, the packing ratio of the powder material in the building area will increase. As a result, the resulting 3D object will have a higher degree of compactness and a well-finished surface.

The lower limit of the average particle diameter (by volume) of the secondary particles is, in view of the handling in forming the secondary particles and the fluidity of the powder material, 1 $\mu$m or larger, or more preferably 5 $\mu$m or larger, for example, 10 $\mu$m or larger. With increasing average particle diameter of the secondary particles, the fluidity of the powder material increases. As a result, the step of flattening the powder material can be carried out well to fabricate a well-finished 3D object.

In typical, for instance, if fine secondary particles with an average particle diameter below about 10 $\mu$m are used as the powder material in powder additive manufacturing, it will be hard to control the particle shape during the particle production; also, an increase in specific surface area tends to result in a decrease in fluidity and hardship in the flattening process. The small mass will cause dispersion of the powder material, etc., whereby the handling may be complicated. On the other hand, the powder material disclosed herein is formed of secondary particles in which primary particles with an average particle diameter below 10 $\mu$m are three-dimensionally bonded with interspaces. Because of this, while keeping the shapes of the primary particles, the powder material can have a good weight to it; even when the secondary particles are formed of different species of raw particles, their concentrations are constant in the powder material. This can provide an absolutely novel powder material for powder additive manufacturing that combines the advantages associated with the use of secondary particles with a smaller average particle diameter and the advantages associated with the use of secondary particles with a larger average particle diameter.

<Average particle diameter of primary particles>

The primary particles are not particularly limited in average particle diameter.

For instance, when the powder material is formed in an embodiment of microparticle-coated particles in which core particles as the first primary particles have on their surfaces microparticles being the second primary particles, the average particle diameters of these particles can be adjusted as shown below.

In particular, the average particle diameter of the core particles is close or approximately equal to the average particle diameter of the powder material. Thus, the average particle diameter of the core particles can be designed to be relatively large. For instance, the average particle diameter can be 100 $\mu$m or smaller; it is typically 50 $\mu$m or smaller, preferably 30 $\mu$m or smaller, more preferably 20 $\mu$m or smaller, or particularly preferably 10 $\mu$m or smaller. The minimum average particle diameter of the core particles is not particularly limited. To obtain a certain degree of fluidity with the core particles, the lower limit is preferably 1 $\mu$m or larger. The average particle diameter of the core particles can be adjusted through the average particle diameter of the raw particles.

On the other hand, with respect to the microparticles, their particle diameters are of importance in view of their capability of serving as a lubricant for the core particles to bring about a significant increase in fluidity. The average particle diameter of the microparticles can be 1000 nm or smaller, or typically 500 nm or smaller. The microparticles are preferably 100 nm or smaller, more preferably 50 nm or smaller, or particularly preferably 30 nm or smaller in average particle diameter. The minimum average particle diameter of the microparticles is not particularly limited. For instance, it can be 1 nm or larger, 5 nm or larger, or preferably 10 nm or larger. The amount of the microparticles coating the core particles is, by mass, sufficiently about 2000 ppm or less, for instance, preferably about 100 ppm to 2000 ppm, or more preferably about 500 ppm to 1000 ppm.

On the other hand, the powder material is the granulated particles and granulated sintered particles, the average particle diameter of the primary particles is preferably, for instance, smaller than 10 $\mu$m. With the primary particles having such a small average particle diameter, a more compact and precise 3D object can be fabricated. The average particle diameter of the primary particles is preferably 6 $\mu$m or smaller, for example, more preferably 3 $\mu$m or smaller.

In general, in a powder of a nanometer order, individual particles weigh little and thus are easily blown by a little draft of air, resulting typically in poor fluidity. However, with respect to the granulated particles and granulated sintered particles, the secondary particles have some weight to them; and therefore, their fluidity is not impaired even when the primary particles are in the nanoscale range. From such a standpoint, the primary particles preferably have an average particle diameter of 2 $\mu$m or smaller. For instance, they can be nanoparticles with an average particle diameter of, for instance, 1 $\mu$m or smaller, 500 nm or smaller, or 100 nm or smaller. The average particle diameter of the primary particles is not particularly limited. For instance, it can be 1 nm or larger, e.g. 2 nm or larger, or 5 nm or larger.

With respect to the powder material of the granulated particles and granulated sintered particles, sufficient interspaces are included between the primary particles forming the secondary particles. For example, these "interspaces" are larger than spaces inevitably formed when the primary particles are close-packed. The interspaces may be preferably 1.2 times or larger than the spaces inevitably formed when the primary particles are close-packed. The presence of these interspaces can be confirmed with, for instance, a specific surface area/porosity analyzer and the like.

With the primary particles having such a small average particle diameter, for instance, the powder material can be softened or melted at a lower temperature than the melting point of the secondary particles themselves forming the powder material. This could never have been anticipated and could be a completely new finding. Thus, the powder material can be softened or melted, for instance, at a lower laser output than conventional levels in powder additive manufacturing, bringing about process cost reduction. The efficiency of softening or melting the secondary particles will also increase, allowing for fabrication of a compact 3D object with a low porosity. By this, for instance, a 3D object can be fabricated, having properties close to those of the powder material in a bulk.

<Specific surface area>

While the specific surface area of the powder material is not particularly limited, it is preferably, for instance, larger than 0.1 m$^2$/g. In other words, it is preferable that the powder material primarily comprises secondary particles whose specific surface area is (exceedingly) large. In particular, for instance, since silica (SiO$_2$) has a specific gravity of 2.2 g/mL, perfectly spherical silica particles with a radius r (m) have a specific surface area of 1.36/r $\times$ 10$^{-6}$ m$^2$/g. Thus, for instance, perfectly spherical silica particles with a radius of 30 $\mu$m have a specific surface area of 0.045 m$^2$/g. Also, because $\alpha$-alumina (Al$_2$O$_3$) has a specific gravity of 3.98 g/mL, perfectly spherical alumina with a radius r (m) has a specific surface area of 0.75/r $\times$ 10$^{-6}$ m$^2$/g. Accordingly, for instance, perfectly spherical alumina particles with a radius of 30 $\mu$m have a specific surface area of 0.025 m$^2$/g. With respect to commercial alumina particles produced by melting/crushing, the measurement based on "Determination of the specific surface area of powders (solids) by gas adsorption-BET method" in JIS Z 8830:2013 (ISO 9277:2010) will be about 0.1 m$^2$/g. On the other hand, the powder material disclosed herein preferably has a specific surface area of 0.1 m$^2$/g or larger. In association with the increased specific surface area, the powder material disclosed herein has complex surface texture (structure) with three-dimensional contours. In other words, actual dimensions (e.g. thicknesses of the surface contours, etc.) can be significantly reduced in scale, unbound by the average particle diameter of the powder material itself. Thus, with such an exceedingly large specific surface area, even a ceramic material having a high melting point can efficiently absorb heat from a heat source such as a relatively low-temperature laser, etc., for sufficient softening and melting. Accordingly, a powder material is provided to enable efficient fabrication of a ceramic 3D object.

It is presumed that since layering can be achieved by heating at a relatively low temperature, additive manufacturing is possible at a temperature where the growth of particles is inhibited. In addition, even if the secondary particles include acomponent having a low melting point, the composition of the powder material is less susceptible to thermal alteration. Thus, the composition of a 3D object to be fabricated can be easily controlled. Thus, while the specific surface area of the secondary particles is not particularly limited to a certain range, it is desirably larger and preferably 0.1 m$^2$/g or larger.

<Particle size range>

It is preferable that the particle size range of the powder material is suitably selected in accordance with the type and conditions of equipment used for powder additive manufacturing. In particular, the particle size range of the powder material can be suitably adjusted to be, for instance, 5 $\mu$m to 20 $\mu$m, 45 $\mu$m to 150 $\mu$m, 5 $\mu$m to 75 $\mu$m, 32 $\mu$m to 75 $\mu$m, 15 $\mu$m to 45 $\mu$m, 20 $\mu$m to 63 $\mu$m, or 25 $\mu$m to 75 $\mu$m.

<Roundness>

The powder material disclosed herein preferably has a mean roundness of less than 1.5 (e.g. 1 or greater, but less than 1.5). The mean roundness is used as an index that indirectly indicates the mean sphericity of the secondary particles forming the powder material. It indicates the mean roundness determined from plan-view images of the secondary particles viewed from arbitrary directions. Thus, the mean roundness does not necessarily indicate that the secondary particles are two-dimensionally close to perfect circles; essentially, it rather indicates that they are three-dimensionally close to perfect spheres.

In particular, it has been found that when the secondary particles comprise ceramic, because unspheroidized ceramic is highly crystalline, the external structure of the crystal system tends to be easily reflected as the shapes of the particles. Especially, crushed ceramic particles have shown a strong tendency toward this because cracking occurs along crystal planes. Even if they do not appear to have an ideal crystalline structure, they may externally appear in a form close to a polyhedron formed with certain crystal planes connected. Thus, with respect to a powder material formed of ceramic-containing secondary particles that have edges, corner angles (possibly apices) and corners, in the step of flattening the powder material, the ceramic-containing secondary particles have tended to mesh with one another, leading to lower fluidity.

On the other hand, with the secondary particles being nearly perfectly spherical as described above, for instance, by reducing the influence of the crystal planes, edges, corner angles, corners and the like reflecting the crystallinity of the ceramic forming the particles, the fluidity of the ceramic-containing secondary particles can be significantly increased. In other words, in the powder material having the form of secondary particles disclosed herein, the primary particles can be in a form reflecting the high crystallinity of the ceramic. For instance, even if they have prismatic shapes, clumpy shapes, etc., as long as the mean roundness is satisfied, high fluidity can be obtained. The mean roundness can be an index that may reflect a level of mean sphericity that cannot be indicated with indices such as the mean aspect ratio. Because of this, in the flattening process of powder additive manufacturing, for increased fluidity, the mean roundness of the ceramic particles is preferably as close to 1 as possible and can be 1 or higher. The mean roundness is preferably 2.7 or lower, more preferably 2.0 or lower, or possibly 1.5 or lower, for example, 1.2 or lower.

<Aspect ratio>

With respect to the external shapes of the secondary particles, the mean aspect ratio is more preferably lower than 1.4 in plan view. This is because, as described above, in the secondary particles having a mean roundness closer to 1, the roundness may be more reflective of the surface structures of the secondary particles than their overall shapes. In other words, in evaluating nearly perfectly circular secondary particles, with increasing micro-level complexity of outlines of the secondary particles in plan view, the roundness value tends to increase beyond the extent of changes in the overall external shapes of the secondary particles. Thus, in addition to the roundness, by defining the aspect ratio for the external shapes of the secondary particles, the secondary particles can be closer to perfect spheres with respect to their overall shapes, that is, closer to perfect circles in plan view.

In view of the fluidity of the powder material, the mean aspect ratio is preferably 1.5 or lower, or more preferably 1.3 or lower. For instance, it can be 1.15 or lower. It is desirably 1 or as close to 1 as possible.

<Fractal dimension>

With respect to the secondary particles, the mean fractal dimension is below 1.5 in a preferable embodiment. Such secondary particles may have surfaces with micro-level complexity. Thus, by further defining various indices for the complex structures of the particle surfaces, the secondary particles can be externally yet closer to perfect spheres. The fractal dimension is an index widely used to assess complexity of surfaces of individual particles. The index can be suited for evaluating the surface smoothness of the secondary particles disclosed herein. With the fractal dimension defined to be below 1.5, the powder material can be obtained with yet greater fluidity. In view of the fluidity of the powder material, the mean fractal dimension is preferably 1.1 or lower, or more preferably 1.05 or lower.

<Angle of repose>

In addition, the powder material disclosed herein has an angle of repose smaller than 39° in a preferable embodiment. The angle of repose can be one of the indices widely used heretofore to indicate the fluidity of a powder. For instance, the index may practically reflect the spontaneous fluidity of the powder material being carried through a feeder and molding equipment. Thus, when the angle of repose is defined to be a small value, the powder material can be obtained with high fluidity. Consequently, the powder material may allow for more productive fabrication of a 3D object with uniform quality.

In view of the fluidity of the powder material, the angle of repose is preferably 36° or smaller, or more preferably 32° or smaller. For instance, it can also be 30° or smaller. The minimum angle of repose is not particularly limited. With too small an angle of repose, the powder material may be more susceptible to dispersion (scattering) or it may be difficult to control the supply amount of the powder material. In general, the angle of repose is, for instance, 20° or larger.

<Flow function>

The powder material disclosed herein exhibits a flow function of 5.5 or greater.
The angle of repose above is an index with which the fluidity of a powder material under no load can be tested. On the other hand, the flow function is for evaluating flow properties by measuring shear stress of the powder material in a compressed state. It may serve as an index that can more practically indicate the handling properties of the powder material. Thus, for instance, high fluidity of a powder material with an average particle diameter below 30 $\mu$m can also be accessed through such a feature, whereby a powder material that enables yet more productive fabrication of 3D objects can be provided.

<Compressive strength>

The minimum compressive strength of the secondary particles forming the powder material is 1 MPa, more preferably 10 MPa, and yet more preferably 100 MPa. With increasing compressive strength of the secondary particles, the shape-holding ability of the secondary particles forming the powder material will increase to prevent the secondary particles from breaking down (falling apart). As a result, the powder material is stably supplied to the building area.
The maximum compressive strength of the secondary particles is 1000 MPa. With decreasing compressive strength of the secondary particles, the efficiency of forming an object with the powder material will increase.

<Method for producing 3D object>

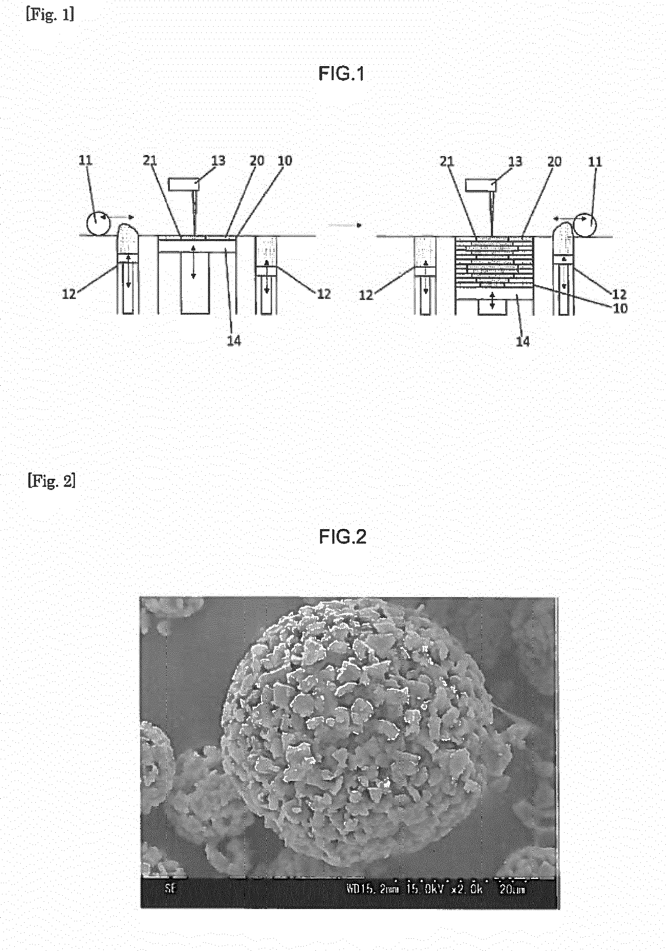

Examples of the method for producing a 3D object by powder layering (deposition) using the powder material in this disclosure include the following method. Fig. 1 shows a schematic diagram of an example of a system for powder additive manufacturing. In a general configuration, it comprises a building area 10 which is a space where additive manufacturing (layering) takes place, a stocker 12 where the powder material is stocked, a wiper 11 that assists the supply of the powder material to building area 10, and a solidifying means (inkjet head, laser oscillator, etc.) 13 to solidify the powder material. Building area 10 typically has a circumferentially-surrounded building space below its building surface and includes an up-down table 14 that can be raised or lowered inside the building space. The up-down table 14 can be lowered by a prescribed thickness $\Delta t1$ and the object of interest is built up on the up-down table 14. Stock 12 is placed near building area 10 and comprises, for instance, a bottom plate (an up-down table) that can be raised or lowered with a cylinder etc., in a circumferentially-surrounded stock space. The bottom plate can be raised to supply (extrude) a prescribed amount of the powder material to the building surface.
In such an additive manufacturing system, with the up-down table 14 lowered from the building surface by the prescribed thickness $\Delta t1$, a powder material layer 20 can be supplied to building area 10, with the powder material layer having the prescribed thickness $\Delta t1$. Here, the building surface is scanned with wiper 11 to supply the powder material extruded from stock 12 over building area 10 and flatten the surface of the powder material at the same time, whereby the powder material layer 20 can be formed uniformly. For instance, with respect to the first powder material layer 20 just formed, only the area to be solidified corresponding to the slice data of the first layer is subjected to heat or provided with a solidifying composition, etc., via solidifying means 13 to sinter, bond, etc., the powder material into the desired cross section, whereby the first solidified powder layer 21 can be formed.
Subsequently, up-down table 14 is lowered by the prescribed thickness $\Delta t1$ and the powder material is supplied again and levelled with wiper 11 to form the second powder material layer 20. Then, only the area to be solidified corresponding to the slice data of the second layer is subjected to heat or provided with a solidifying composition, etc., via solidifying means 13 to solidify the powder material, whereby the second solidified powder layer 21 can be formed. During this, the second solidified powder layer 21 and the first solidified powder layer 21 below it are fused to form a laminate up to the second layer.
The aimed 3D object can be produced by successively repeating the step of lowering up-down table 14 by the prescribed thickness $\Delta t1$ and forming a new powder material layer 20; providing heat, a solidifying composition, etc., via solidifying means 13 to turn a desired area into a solidified powder layer 21.

Examples of the means of solidifying the powder material include a method where a composition to solidify the powder material is jetted (ink-jetted), a method where the powder material is melted and solidified with heat from a laser; and for a photocuring powder material, irradiation of UV light suited to its photocuring properties and the like can be selected. In particular, when a laser is used as the means of solidifying the powder material, for instance, a carbon dioxide laser and a YAG laser can be favorably used. When the powder material is solidified by ink-jetting of a composition, as the adhesive, a composition comprising polyvinyl pyrrolidone, polyvinyl alcohol, polyvinyl butyral, polyacrylic acid, polyacrylic acid derivative, polyamide, etc.; or a composition comprising, for instance, a polymerization initiator, etc., can be used. When a photocuring powder material is used as the powder material, an excimer laser (308 nm), a He-Cd laser (325 nm) and an Ar laser (351 nm to 346 nm) having UV wavelength ranges can be used; when a visible light-curing resin is used, an Ar laser (488 nm), etc., can be used. That is, in accordance with the properties of the powder material used, a suitable means of solidifying the powder material should be selected.

The powder material, the secondary particles forming it, and the primary particles forming the secondary particles may comprise other components such as inevitable impurities.

In other words, their purities are not particularly limited. However, for an application where a highly functional 3D object is made, contamination with unintended substances (elements) is preferably avoided and the higher the purity is, the more preferable the powder material is. From such a standpoint, it is preferable that the secondary particles and the primary particles forming them have high purities. For instance, their purities are 95 % by mass or higher, more preferably 99 % by mass or higher, or yet more preferably 99.9 % by mass or higher, for instance, 99.99 % by mass or higher.

The powder material may include, for instance, other elements to adjust the color tone of the 3D object formed. For instance, with respect to ceramic and cermet, transition metals and elements such as Na, K and Rb can be included or other elements can be included to increase the functionality. The atomic elements forming the powder material may be partially included as ions, complexes, etc.

While the powder material is formed of particles having a form of secondary particles that are formed with primary particles bound three-dimensionally with some interspaces, it may comprise particles having other forms besides that of the secondary particles. However, it is preferable that the amount of particles excluding the secondary particles is preferably as small as possible. This is because the present disclosure has found out that the problems with fluidity, etc., can be solved by the use of a powder material formed of secondary particles that are formed with primary particles bound three-dimensionally with some interspaces. Accordingly, relative to the total amount of the powder material, the higher the ratio of the secondary particles in a prescribed embodiment is, the greater the effects of this disclosure will be. In other words, relative to the total amount of the powder material, with decreasing ratio of the secondary particles in the prescribed embodiment, it will be difficult to obtain the effects of this disclosure. In addition, the secondary particles in the prescribed embodiment of this disclosure, greater effects are produced based on the following perspectives. For example, when the powder material is formed as a mixture of different types of single-substance particles such as metal particles and ceramic particles, due to their differences in specific gravity, the particles formed of a material with a greater specific gravity tends to move downwards and the particles formed of a material with a smaller specific gravity tends to move upward, whereby the composition of the powder material will not be uniform. On the other hand, when the secondary particles in a prescribed embodiment as in this disclosure, for instance, if cermet particles as a mixture of metal particles and ceramic particles are used as the secondary particles, or if particles of different materials are mixed to form the secondary particles, the specific gravity will be constant in the secondary particles; and therefore, the composition of the powder material will be less likely to be not uniform and the resulting 3D object will have a better-finished surface. In this view as well, it is preferable to have a high ratio of secondary particles in the prescribed embodiment, relative to the total amount of the powder material. Thus, the minimum secondary particle content of the powder material is 90 % by weight, or preferably 95 % by weight. The upper limit is usually 98 % by weight. It can be suitably adjusted to a level where the effects of this disclosure are not impaired with other component(s) such as additives mixed in.

<Examples>

Several Examples related to the present disclosure are described below, but the present disclosure should not be limited to the following Examples.

101 species of powder materials (building materials) shown in Tables 1 to 4 were obtained.

(Granulated/Sintered Powders)

With respect to the powder materials of Samples 1 to 4-2, raw particles formed of tungsten carbide (WC) and raw particles formed of cobalt (Co) having the average particle diameters shown in Table 1 are granulated and sintered to form WC/12 % by mass Co cermet powders having the average particle diameters shown in Table 1. Similarly, with respect to the powder materials of Samples 101 to 112, tungsten carbide (WC) and nickel (Ni), chromium carbide (CrC) and a nickel/chromium alloy (NiCr), or tungsten carbide (WC) and stellite having the average particle diameters shown in Table 1 are used as raw particles; raw particles in these combinations are granulated and sintered to form cermet powders having the average particle diameters shown in Table 1.

With respect to the powder materials of Samples 9 to 15-2, raw particles formed of alumina ($Al_2O_3$) having the average particle diameters shown in Table 2 are granulated and sintered to form $Al_2O_3$ ceramic powders having the average particle diameters shown in Table 2. With respect to the powder materials of Samples 35 to 36-2 and 119 to 132, raw particles formed of nickel/chromium alloy (NiCr) or raw particles formed of various metals or alloys having the average particle diameters shown in Table 3 are granulated and sintered to form powders formed of various metals or alloys including the NiCr alloy having the average particle diameters shown in Table 3.

With respect to the powder materials of Sample 37 and 37-2, raw particles formed of yttria ($Y_2O_3$) having the average particle diameter shown in Table 4 are granulated and sintered to form $Y_2O_3$ ceramic powders having the average particle diameter shown in Table 4. Similarly, with respect to the powder materials of Samples 133 to 135, powder mixtures of 8 % by mass yttria ($Y_2O_3$) to zirconia ($ZrO_2$) and 4 % or 13 % by mass titania ($TiO_2$) to alumina ($Al_2O_3$) were used as raw particles; these raw particles are granulated and sintered to form powder materials formed of ceramic composite materials having the average particle diameters shown in Table 3.

(Microparticle-Bearing Powders)

The powder materials of Samples 16 to 17-2 and 114 to 118 are $Al_2O_3$ nanoparticle-bearing powders (microparticle-coated powders) having the average particle diameters shown in Table 2. As shown in Table 2, these powder materials were prepared by blending alumina ($Al_2O_3$) core particles consisting of primary particles (average particle diameters: 3 $\mu$m, 6 $\mu$m, 24 $\mu$m, 23 $\mu$m, 13 $\mu$m) and alumina ($Al_2O_3$) nanoparticles consisting of primary particles (average particle diameters: 0.1 $\mu$m, 0.01 $\mu$m, 0.5 $\mu$m) to cause the nanoparticles to stick to the surfaces of the core particles through electrostatic attraction.

(Sintered/Crushed Powders)

The powder materials of Samples 5 to 8 are formed with WC/12 % by mass Co cermet particles having the average particle diameters shown in Table 1, produced by sintering and crushing.

(Fused/Crushed Powders)

The powder materials of Samples 18 to 32 are formed with $Al_2O_3$ ceramic particles having the average particle diameters shown in Table 2, produced by fusion and crushing.

(PEG-Coated Powders)

In the powder materials of Samples 33 and 33-2, $Al_2O_3$ particles are coated with polyethylene glycol (PEG), whereby these samples are formed with PEG-coated $Al_2O_3$ particles having the average particle diameters shown in Table 2.

(Atomized Powder)

Sample 34 is formed with NiCr alloy particles having the average particle diameter shown in Table 3, produced by atomization.

The powder materials were prepared by granulation and sintering in the next procedures. Raw particles (primary particles, e.g. ultrafine particles of tungsten carbide, cobalt, alumina, yttria, etc.) having a prescribed average particle diameter are subjected to a surface treatment, formulated into a desired composition, and mixed well with a binder (PVA, polyvinyl alcohol) and sufficiently dispersed in a solvent (a mixture of water and alcohol, etc.) so as to prepare a slurry. Subsequently, using a spray granulator, a drying/sintering oven, etc., the slurry is granulated as mist droplets, allowed to dry, and sintered to obtain secondary particles. Such secondary particles were sifted as necessary and used as the powder material. For instance, as shown in Fig. 2, the secondary particles in the powder materials of Samples 1 to 4-2, 101 to 112, 9 to 15-2, 35 to 37 and 119 to 135 obtained by the granulation/sintering method have three-dimensional structures formed of ultrafine primary particles bound three-dimensionally with interspaces, the secondary particles being approximately spherical. The primary particle sizes in these samples are not limited to the examples in Fig. 2, varying corresponding to the average particle diameters of the raw particles, etc.

The powder materials were prepared by the sintering/crushing and fusion/crushing methods in the next procedures. Raw particles are formulated to obtain powder materials having desired compositions (tungsten carbide/cobalt cermet powder, alumina ceramic powder, yttria ceramic powder, etc.); the raw particles are heated to sinter together or melt, and allowed to cool to obtain solids (ingots). The solids were mechanically crushed and sifted as necessary to obtain powders. The particles in the powder materials of Samples 5 to 8 and 18 to 32 obtained by the sintering/crushing and fusion/crushing methods were relatively compact and hard, having angular or clumpy shapes with edges unique to crushed powders.

The powder materials of Samples 16 to 118 were relatively compact and hard, reflecting the shapes of the $Al_2O_2$ particles used as the raw particles; they appeared to have angular or clumpy shapes.

The powder material of Sample 33 was relatively compact and hard, reflecting the shapes of the $Al_2O_3$ particles used as the raw particles; they had angular or clumpy shapes with edges. The powder material of Sample 34 was free of edges, but had relatively distorted spherical shapes.

The shapes and fluidity of the powder materials of Samples 1 to 8 were evaluated. The results are shown together in Table 1. The shapes and fluidity of the powder materials of Samples 9 to 33 were evaluated. The results are shown together in Table 2. The shapes and fluidity of the powder materials of Samples 34 to 37 were also evaluated. The results are shown together in Table 3. The symbol "-" in Tables 1 to 4 indicates that the corresponding physical properties and fluidity are undetermined. The methods for measuring the physical properties shown in Tables 1 to 4 are described below.

[Average Particle Diameter of Powder material]

The average particle diameters of the powder materials are the D50 particle diameters based on their particle size distributions by volume, determined using a laser diffraction/scattering particle size analyzer (LA-300 available from Horiba, Ltd.). The measurement results of average particle diameters of the powder materials are shown in the column headed "Average particle diameter" of powder material (secondary particles) in each table.

[Average Particle Diameter of Raw Particles]

The same that applies to the powder materials also applies to the average particle diameters of the raw particles. With respect to the raw particles having average particle diameters of 1 μm or larger, the values are the D50 particle diameters based on their particle size distributions by volume, determined using a laser diffraction/scattering particle size analyzer (LA-300 available from Horiba, Ltd.). With respect to the raw powders with average particle diameters below 1 μm, the average particle diameters were determined based on their specific surface areas, similarly to the primary particle diameters of the powder materials described later.

For comparison between the raw particles and the resulting powder materials, the average particle diameter ratio of raw particles to powder material is shown as "$D_{RAW}/D_{POWDER}$."

[Primary Particle Diameter of Powder material]

For the average particle diameters of the powder materials, the values determined from their specific surface areas were used. In other words, the average particle diameters (Dave) related to the powder materials are the values determined based on the equation shown below, with Sm being the specific surface area of a powder material and ρ being its density defined separately. As the densities of the respective powder materials, for instance, the following values were used: 14.31 g/ml for WC/12 % by mass Co, 3.98 g/ml for $Al_2O_3$, and 5.03 g/ml for $Y_2O_3$. With respect to the other materials, the values determined based on product sheets and published compositions can be used The average particle diameter values thus determined with respect to the primary particles forming the secondary particles are shown in the column headed "Dave" under raw particles (primary particles) in each table.

$$Dave = 6/(\rho \, Sm)$$

[Specific Surface Area]

Using a dynamic flow surface area analyzer (FLOWSORB II 2300 available from Shimadzu Corporation), the specific surface areas of the powder materials were measured by the BET method using nitrogen as the adsorbate gas. In particular, a powder material sample is placed in a test tube and the test tube is cooled; nitrogen is introduced into the test tube to prepare an adsorption/desorption isothermal curve by constant-volume gas adsorption. With respect to the adsorption/desorption isothermal curve, the transition from the first monolayer (single molecular layer) adsorption to a multi-layer adsorption is analyzed based on the BET method; the amount of monolayer adsorption and the integral effective cross-sectional area of one nitrogen molecule are determined to obtain the specific surface area. The measurement results of specific surface areas thus determined are shown in the column headed "Specific surface area" in each table.

[Particle Size Range]

For the particle size distributions of the powder materials, the respective powder materials were analyzed, using a laser diffraction/scattering particle size analyzer. The lower limit of a size distribution is the particle diameter at which the total volume of the particles having the certain particle diameter or smaller is 5 % of the total volume of the powder material, determined using a laser diffraction/scattering particle size analyzer (LA-300 available from Horiba, Ltd.). On the other hand, the upper limit of a size distribution shows the particle diameter at which the total volume of the particles having the certain particle diameter or larger is 5 % of the total volume of the powder material, determined using a laser diffraction/scattering particle size analyzer (LA-300 available from Horiba, Ltd.). The measurement results of particle size distributions of the powder materials formed of secondary particles are shown in the column headed "Particle size range" in each table.

[Mean Roundness]

The mean roundness values of the powder materials were determined as follows: Each powder material was analyzed by a scanning electron microscope (SEM, S-3000N available from Hitachi High-Technologies Corporation); with respect to the resulting plan-view images (magnification = 1000 to 2000), using image analysis software (IMAGE-PRO PLUS available from Nippon Roper K. K.), roundness was measured for 100 or more secondary particles and their arithmetic mean roundness value was determined. The roundness is the value determined based on the relationship Roundness = $\mathrm{perimeter}^2/(4\pi \cdot \mathrm{surface\ area})$ where the perimeter and surface area (in plan view) of a secondary particle are determined by tracing the outline of the secondary particle based on the contrast of the SEM image. The measurement results of mean roundness of the powder materials are shown in the column headed "Roundness" in each table.

[Mean Aspect Ratio]

The mean aspect ratios of the powder materials were determined as follows: Each powder material was analyzed by a scanning electron microscope (SEM, S-3000N available from Hitachi High-Technologies Corporation); with respect to the resulting plan-view images (magnification = 1000 to 2000), using image analysis software (IMAGE-PRO PLUS available from Nippon Roper K. K.), aspect ratios were measured for 100 or more secondary particles and their arithmetic mean aspect ratio value was determined. The aspect ratio is determined by tracing the outline of a secondary particle based on the contrast of its SEM image; the aspect ratio is the value defined as a/b with a being the long diameter (long axis length) and b being the short diameter (short axis length) of its equivalent oval (an oval with equal surface area as well as equal first and second moments). The measurement results of mean aspect ratios of the powder materials are shown in the column headed "Aspect ratio" in each table.

[Mean Fractal Dimension]

The mean fractal dimension values of the powder materials were determined as follows: Each powder material was analyzed by a scanning electron microscope (SEM, S-3000N available from Hitachi High-Technologies Corporation); with respect to the resulting plan-view images (magnification = 1000 to 2000), using image analysis software (IMAGE-PRO PLUS available from Nippon Roper K. K.), fractal dimension was measured for 100 or more secondary particles and their arithmetic mean fractal dimension value was determined. The SEM analysis was performed at $2000\times$ magnification at 8 bit depth at a scanning rate of 80/100 s. For the fractal dimension measurement, SEM images were obtained at a resolution where the perimeters of secondary particles were at least 30 pixels long (preferably 1280 pixels or more, 960 $\times$ 1280 pixels in this embodiment). In the fractal dimension analysis, the outline of a secondary particle was traced based on the contrast of its SEM image to determine the perimeter and surface area (in plan view) of the secondary particle; from these values, the fractal dimension was determined based on the relationship <u>Roundness = $\mathrm{perimeter}^2/(4\pi \cdot \mathrm{surface\ area})$</u>

[Compressive Strength]

The compressive strength values of the powder materials were determined as follows: For each powder material, 10 secondary particles were measured for compressive strength, using a micro compression tester (MCTE-500 available from Shimadzu Corporation); the arithmetic mean value of the resulting compressive strength values was determined. In particular, it indicates the compressive strength $\sigma$ (MPa) of a secondary particle determined by an equation $\sigma = 2.8 \times L/\pi/d^2$. In the equation, L is the critical load (N) and d is the average secondary particle diameter (mm). While secondary particles are subjected to a compressive load by an indenter, with the load increasing at a constant rate, the critical load is the amount of the compressive load applied to the secondary particles when the displacement of the indenter sharply increases. The measurement results of compressive strength of the secondary particles are shown in the column headed "Compressive strength" in each table.

[Angle of Repose]

As an index to evaluate the fluidity of the powder materials, their angles of repose were measured. The angles of repose were obtained by subjecting the respective powder materials to an A.B.D. powder tester (Model ABD-72 available from Tsutsui Scientific Instruments Co., Ltd.). The measurement results of angle of repose of the powder materials are shown in columns headed "Angle of repose" in the respective tables. In this test, favorable levels of angle of repose for practical use can be 33° or smaller for a secondary particle composition of a cermet (e.g. WC/12 % by mass Co), 34° or smaller for a ceramic (e.g. $Al_2O_3$ and $Y_2O_3$) and 50° or smaller for a metal or an alloy (e.g. NiCr).

[Flow function]

As for another index to evaluate the fluidity of the powder materials, the respective powder materials were analyzed by a powder rheometer (Powder Rheometer FT4 available from Freeman Technology). The results of flow function analysis of the powder materials are shown in the columns headed "F.F." in the respective tables. In tables 1-4, only samples with production method of "granulated/sintered" are inventive samples, while all other samples produced with other production methods, such as "sintered/ crushed", "nano-$Al_2O_3$-bearing" and 2, "melted/crushed", "PEG-coated" and "atomized" are reference samples.

[Table 1]

Table 1

| Sample No. | Composition | Production method | Powder material (secondary particles) | | | | | Raw p articles (pri mary partic les) | | | | $D_{RAW}$ /$D_{POWDER}$ |
| | | | Average particle diameter ($\mu$m) | Particle size range ($\mu$m) | Aspect ratio | Compressive strength (MPa) | Angle of repose (deg) | Average particle diameter ($\mu$m) | D95 ($\mu$m) | $D_5$ ($\mu$m) | $D_{95}$/$D_5$ | |
|---|---|---|---|---|---|---|---|---|---|---|---|---|
| 1 | WC/Co | granulated/sintered | 100 | 45-150 | 1.35 | 70 | 28 | 1 | - | - | - | - |
| 1-2 | WC/Co | granulated/sintered | 100 | 45-150 | 1.35 | 70 | 28 | 1 | 3.869 | 0.324 | 11.941 | 0.010 |
| 2 | WC/Co | granulated/sintered | 50 | 32-75 | 1.31 | 50 | 28 | 1 | - | - | - | - |
| 2-2 | WC/Co | granulated/sintered | 50 | 32-75 | 1.31 | 50 | 28 | 1 | 3.746 | 0.286 | 13.098 | 0.020 |
| 3 | WC/Co | granulated/sintered | 30 | 15-45 | 1.24 | 30 | 30 | 1 | - | - | - | - |
| 3-2 | WC/Co | granulated/sintered | 30 | 15-45 | 1.24 | 30 | 30 | 1 | 5.106 | 0.283 | 18.042 | 0.033 |
| 4 | WC/Co | granulated/sintered | 13 | 5-20 | 1.13 | 30 | 31 | 1 | - | - | - | - |
| 4-2 | WC/Co | granulated/sintered | 13 | 5-20 | 1.13 | 30 | 31 | 1 | 4.883 | 0.412 | 11.852 | 0.077 |
| 101 | WC/Ni | granulated/sintered | 100 | 45-150 | 1.02 | 60 | 28 | 1.5 | 6.843 | 0.215 | 31.828 | 0.015 |
| 102 | WC/Ni | granulated/sintered | 50 | 32-75 | 1.01 | 40 | 28 | 1.5 | 8.134 | 0.346 | 23.509 | 0.030 |
| 103 | WC/Ni | granulated/sintered | 30 | 15-45 | 1.01 | 30 | 30 | 1.5 | 7.776 | 0.426 | 18.254 | 0.050 |
| 104 | WC/Ni | granulated/sintered | 13 | 5-20 | 1.04 | 20 | 34 | 1.5 | 8.966 | 0.351 | 25.544 | 0.115 |
| 105 | CrC/NiCr | granulated/sintered | 100 | 45-150 | 1.00 | 75 | 29 | 3.5 | 9.409 | 0.669 | 14.064 | 0.035 |
| 106 | CrC/NiCr | granulated/sintered | 50 | 32-75 | 1.02 | 55 | 30 | 3.5 | 10.371 | 0.547 | 18.960 | 0.070 |
| 107 | CrC/NiCr | granulated/sintered | 30 | 15-45 | 1.04 | 30 | 32 | 3.5 | 11.544 | 0.482 | 23.950 | 0.117 |
| 108 | CrC/NiCr | granulated/sintered | 13 | 5-20 | 1.05 | 15 | 33 | 3.5 | 10.649 | 0.358 | 29.746 | 0.115 |
| 109 | WC/stellite | granulated/sintered | 100 | 45-150 | 1.05 | 55 | 31 | 1.5 | 7.263 | 0.156 | 46.558 | 0.015 |
| 110 | WC/stellite | granulated/sintered | 50 | 32-75 | 1.06 | 40 | 32 | 1.5 | 6.395 | 0.143 | 44.720 | 0.030 |
| 111 | WC/stellite | granulated/sintered | 30 | 45-150 | 1.07 | 35 | 34 | 1.5 | 8.840 | 0.326 | 27.117 | 0.050 |
| 112 | WC/stellite | granulated/sintered | 13 | 5-20 | 1.12 | 25 | 34 | 1.5 | 7.936 | 0.251 | 31.618 | 0.115 |
| 5 | WC/Co | sintered/crushed | 100 | 45-150 | 2.43 | 100 | 34 | - | - | - | - | - |
| 6 | WC/Co | sintered/crushed | 50 | 32-75 | 2.41 | 100 | 39 | - | - | - | - | - |

| Sample No. | Composition | Production method | Powder material (secondary particles) | | | | | Raw p articles (pri mary partic les) | | | | $D_{RAW}$ /$D_{POWDER}$ |
| | | | Average particle diameter ($\mu$m) | Particle size range ($\mu$m) | Aspect ratio | Compressive strength (MPa) | Angle of repose (deg) | Average particle diameter ($\mu$m) | D95 ($\mu$m) | $D_5$ ($\mu$m) | $D_{95}$/$D_5$ | |
| --- | --- | --- | --- | --- | --- | --- | --- | --- | --- | --- | --- | --- |
| 7 | WC/Co | sintered/crushed | 30 | 15-45 | 2.21 | 100 | 42 | - | - | - | - | - |
| 8 | WC/Co | sintered/crushed | 13 | 5-20 | 2.26 | 100 | 46 | - | - | - | - | - |

Table 2

| Sample No. | Composition | Production method | Powder Material (Secondary particles) | | | | | | | | | Raw particle (primary particles) | | | | | $D_{RAW}/D_{POWW-DER}$ |
|---|---|---|---|---|---|---|---|---|---|---|---|---|---|---|---|---|---|---|
| | | | Average particle diameter ($\mu$m) | Nanoparticles (ppm) | Specific surface area ($m^2$/g) | Average primary particle diameter ($\mu$m) | Particle size range ($\mu$m) | Mean roundness | Aspect ratio | Fractal dimension | Compressive strength (MPa) | F. F. | Angle of repose (deg) | Average particle diameter ($\mu$m) | $D_{95}$ ($\mu$m) | $D_5$ ($\mu$m) | $D_{95}/$-$D_5$ | |
| 9 | Al2O3 | granulated/sin-tered | 50 | - | - | - | 32-75 | - | 1.21 | - | 20 | - | 30 | 1 | 1.949 | 0.596 | 3.270 | - |
| 9-2 | Al2O3 | granulated/sintered | 50 | - | - | - | 32-75 | - | 1.21 | - | 20 | - | 30 | 1 | 1.949 | 0.596 | 3.270 | 0.0200 |
| 10 | Al2O3 | granulated/sintered | 30 | - | - | - | 15-45 | - | 1.17 | - | 30 | - | 32 | 1 | 1.913 | 0.483 | 3.961 | - |
| 10-2 | Al2O3 | granulated/sintered | 30 | - | - | - | 15-45 | - | 1.17 | - | 30 | - | 32 | 1 | 1.913 | 0.483 | 3.961 | 0.0333 |
| 11 | Al2O3 | granulated/sintered | 25 | - | - | - | - | 25 | - | 1.4 | - | 8.3 | - | - | 2.036 | 0.497 | 4.097 | - |
| 11-2 | Al2O3 | granulated/sintered | 25 | - | - | - | 10-38 | 25 | 1.09 | 1.4 | - | 8.3 | - | 1 | 2.036 | 0.497 | 4.097 | 0.0400 |
| 12 | Al2O3 | granulated/sintered | 24 | - | 1.6 | - | - | 1.15 | 1.19 | 1.02 | - | - | 32 | 0.5 | 1.036 | 0.241 | 4.299 | - |
| 12-2 | Al2O3 | granulated/sintered | 24 | - | 1.6 | 0.942 | 10-38 | 1.15 | 1.19 | 1.02 | - | - | 32 | 0.5 | 1.036 | 0.241 | 4.299 | 0.0208 |
| 13 | Al2O3 | granulated/sintered | 24 | - | 85.7 | - | - | 1.1 | 1.14 | 1.01 | - | 9.2 | 31 | 0.01 | 0.084 | 0.046 | 1.826 | - |
| 13-2 | Al2O3 | granulated/sintered | 24 | - | 85.7 | 0.018 | 10-38 | 1.1 | 1.14 | 1.01 | - | 9.2 | 31 | 0.01 | 0.084 | 0.046 | 1.826 | 0.0004 |
| 113 | Al2O3 | granulated/sintered | 23 | - | 164.3 | 0.009 | 10-38 | - | 1.01 | - | 25 | - | 34 | 0.005 | 0.009 | 0.001 | 9.000 | 0.0002 |
| 14 | Al2O3 | granulated/sintered | 18 | - | - | - | - | 18 | - | 1.4 | - | 8.3 | - | - | 1.967 | 0.528 | 3.725 | - |
| 14-2 | Al2O3 | granulated/sintered | 18 | - | - | - | 5-25 | 18 | 1 | 1.4 | - | 8.3 | - | 1 | 1.967 | 0.528 | 3.725 | 0.0556 |
| 15 | Al2O3 | granulated/sintered | 13 | - | - | - | 5-20 | - | 1.01 | - | 15 | - | 33 | 0.01 | 0.104 | 0.032 | 3.250 | - |

| Sample No. | Composition | Production method | Powder Material (Secondary particles) | | | | | | | | | | Raw particle (primary particles) | | | | | $D_{RAW}/D_{POWDER}$ |
|---|---|---|---|---|---|---|---|---|---|---|---|---|---|---|---|---|---|---|
| | | | Average particle diameter ($\mu$m) | Nanoparticles (ppm) | Specific surface area ($m^2$/g) | Average primary particle diameter ($\mu$m) | Particle size range ($\mu$m) | Mean roundness | Aspect ratio | Fractal dimension | Compressive strength (MPa) | F. F. | Angle of repose (deg) | Average particle diameter ($\mu$m) | $D_{95}$ ($\mu$m) | $D_5$ ($\mu$m) | $D_{95}$/-$D_5$ | |
| 15-2 | Al2O3 | granulated/sintered | 13 | - | - | - | 5-20 | - | 1.01 | - | 15 | - | 33 | 0.01 | 0.104 | 0.032 | 3.250 | 0.0008 |
| 16 | Al2O3 | nano-Al2O3-bearing | 3 | - | - | - | - | - | - | 1.4 | - | 5.7 | - | 3/0.1 | - | - | - | - |
| 16-2 | Al2O3 | nano-Al2O3-bearing | 3 | 5000 | - | - | 0.1-10 | - | - | 1.4 | - | 5.7 | 67 | 3/0.1 | - | - | - | 0.0333 |
| 17 | Al2O3 | nano-Al2O3-bearing | 6 | - | - | - | - | - | - | 1.4 | - | 5.6 | - | 6/0.1 | - | - | - | - |
| 17-2 | Al2O3 | nano-Al2O3-bearing | 6 | 5000 | - | - | 0.1-10 | - | - | 1.4 | - | 5.6 | 52 | 6/0.1 | - | - | - | 0.0167 |
| 114 | Al2O3 | nano-Al2O3-bearing | 6 | 2000 | - | - | 0.1-10 | - | 2.78 | - | - | - | 48 | 6/0.01 | - | - | - | 0.0017 |
| 115 | Al2O3 | nano-Al2O3-bearing | 24 | 500 | - | - | 8-38 | - | 1.95 | - | - | - | 35 | 24/0.01 | - | - | - | 0.0004 |
| 116 | Al2O3 | nano-Al2O3-bearing | 23 | 10000 | - | - | 8-38 | - | 1.67 | - | - | - | 36 | 23/0.5 | - | - | - | 0.0217 |
| 117 | Al2O3 | nano-Al2O3-bearing | 13 | 1000 | - | - | 5-20 | - | 2.36 | - | - | - | 42 | 13/0.01 | - | - | - | 0.0008 |
| 118 | Al2O3 | nano-Al2O3-bearing | 13 | 10000 | - | - | 5-20 | - | 2.04 | - | - | - | 42 | 13/0.1 | - | - | - | 0.0077 |
| 18 | Al2O3 | melted/crushed | 50 | - | - | - | 32-75 | - | 2.55 | - | 100 | - | 40 | - | - | - | - | - |
| 19 | Al2O3 | melted/crushed | 30 | - | - | - | 15-45 | - | 2.68 | - | 100 | - | 46 | - | - | - | - | - |
| 20 | Al2O3 | melted/crushed | 26.6 | - | - | - | - | - | 3.2 | - | - | - | 35 | - | - | - | - | - |
| 20-2 | Al2O3 | melted/crushed | 26.6 | - | - | - | 15-45 | - | 3.2 | - | - | - | 35 | - | - | - | - | - |
| 21 | Al2O3 | melted/crushed | 26.5 | - | - | - | - | - | 2.7 | - | - | - | 46 | - | - | - | - | - |
| 21-2 | Al2O3 | melted/crushed | 26.5 | - | - | - | 15-45 | - | 2.7 | - | - | - | 46 | - | - | - | - | - |
| 22 | Al2O3 | melted/crushed | 23.5 | - | - | - | - | - | 2.6 | - | - | - | 47 | - | - | - | - | - |

| Sample No. | Composition | Production method | Powder Material (Secondary particles) | | | | | | | | | | | Raw particle (primary particles) | | | | | |
|---|---|---|---|---|---|---|---|---|---|---|---|---|---|---|---|---|---|---|---|
| | | | Average particle diameter ($\mu$m) | Nanoparticles (ppm) | Specific surface area (m$^2$/g) | Average primary particle diameter ($\mu$m) | Particle size range ($\mu$m) | Mean roundness | Aspect ratio | Fractal dimension | Compressive strength (MPa) | F.F. | Angle of repose (deg) | Average particle diameter ($\mu$m) | $D_{95}$ ($\mu$m) | $D_5$ ($\mu$m) | $D_{95}/-D_5$ | $D_{RAW}/D_{POWW-DER}$ |
| 22-2 | Al2O3 | melted/crushed | 23.5 | - | - | - | 8-38 | - | 2.6 | - | - | - | 47 | - | - | - | - | - |
| 23 | Al2O3 | melted/crushed | 23.4 | - | - | - | - | - | 1.9 | - | - | - | 35 | - | - | - | - | - |
| 23-2 | Al2O3 | melted/crushed | 23.4 | - | - | - | 8-38 | - | 1.9 | - | - | - | 35 | - | - | - | - | - |
| 24 | Al2O3 | melted/crushed | 22.9 | - | - | - | - | - | 1.7 | - | - | - | 38 | - | - | - | - | - |
| 24-2 | Al2O3 | melted/crushed | 22.9 | - | - | - | 8-38 | - | 1.7 | - | - | - | 38 | - | - | - | - | - |
| 25 | Al2O3 | melted/crushed | 21.6 | - | - | - | - | - | 1.7 | - | - | - | 36 | - | - | - | - | - |
| 25-2 | Al2O3 | melted/crushed | 21.6 | - | - | - | 8-38 | - | 1.7 | - | - | - | 36 | - | - | - | - | - |
| 26 | Al2O3 | melted/crushed | 20.8 | - | - | - | - | - | 2.2 | - | - | - | 38 | - | - | - | - | - |
| 26-2 | Al2O3 | melted/crushed | 20.8 | - | - | - | 5-25 | - | 2.2 | - | - | - | 38 | - | - | - | - | - |
| 27 | Al2O3 | melted/crushed | 19.8 | - | - | - | - | - | 1.9 | - | - | - | 35 | - | - | - | - | - |
| 27-2 | Al2O3 | melted/crushed | 19.8 | - | - | - | 5-25 | - | 1.9 | - | - | - | 35 | - | - | - | - | - |
| 28 | Al2O3 | melted/crushed | 18.6 | - | - | - | - | - | 1.1 | - | - | - | 37.2 | - | - | - | - | - |
| 28-2 | Al2O3 | melted/crushed | 18.6 | - | - | - | 5-25 | - | 1.1 | - | - | - | 37.2 | - | - | - | - | - |
| 29 | Al2O3 | melted/crushed | 18.2 | - | - | - | - | - | 1.8 | - | - | - | 37 | - | - | - | - | - |
| 29-2 | Al2O3 | melted/crushed | 18.2 | - | - | - | 5-25 | - | 1.8 | - | - | - | 37 | - | - | - | - | - |
| 30 | Al2O3 | melted/crushed | 8 | - | - | - | - | - | 2.1 | - | - | - | 44 | - | - | - | - | - |
| 30-2 | Al2O3 | melted/crushed | 8 | - | - | - | 1-15 | - | 2.1 | - | - | - | 44 | - | - | - | - | - |
| 31 | Al2O3 | melted/crushed | 6.6 | - | - | - | - | - | 2.2 | - | - | - | 46 | - | - | - | - | - |
| 31-2 | Al2O3 | melted/crushed | 6.6 | - | - | - | 0.5-10 | - | 2.2 | - | - | - | 46 | - | - | - | - | - |
| 32 | Al2O3 | melted/crushed | 13 | - | - | - | 5-20 | - | 2.58 | - | 100 | - | 57 | - | - | - | - | - |
| 33 | Al2O3 | PEG-coated | 3 | - | - | - | - | 3 | - | 1.4 | - | 54 | - | - | - | - | - | - |
| 33-2 | Al2O3 | PEG-coated | 3 | - | - | - | 0.5-10 | 3 | - | 1.4 | - | 5.4 | - | - | - | - | - | - |

[Table 3]

[Table 3]

Table 3

| Sample No. | Composition | Production method | Powder material (secondary particles) | | | | | Raw particles (primary particles) | | | | $D_{RAW}/D_{POWER}$ |
| --- | --- | --- | --- | --- | --- | --- | --- | --- | --- | --- | --- | --- |
| | | | Average particle diameter ($\mu$m) | Specific surface area ($m^2$/g) | Particle size range ($\mu$m) | Aspect ratio | Angle of repose (deg) | Average particle diameter ($\mu$m) | D95 ($\mu$m) | $D_5$ ($\mu$m) | $D_{95}/D_5$ | |
| 34 | NiCr | atomized | 13 | 0.031 | 5-20 | 2.33 | 57 | - | - | - | - | - |
| 35 | NiCr | granulated/sintered | 13 | 0.146 | 5-20 | 1.47 | 45 | 10 | - | - | - | - |
| 35-2 | NiCr | granulated/ sintered | 13 | 0.293 | 5-20 | 1.47 | 45 | 10 | 18.915 | 2.234 | 8.467 | 0.7692 |
| 36 | NiCr | granulated/sintered | 13 | 0.149 | 5-20 | 1.12 | 37 | 1 | - | - | - | - |
| 36-2 | NiCr | granulated/sintered | 13 | 0.428 | 5-20 | 1.12 | 37 | 1 | 3.561 | 0.247 | 14.417 | 0.0769 |
| 119 | CoNiCrAlY | granulated/sintered | 34 | 0.061 | 15-45 | 1.02 | 41 | 2 | 5.768 | 0.425 | 13.572 | 0.0588 |
| 120 | Stellite | granulated/sintered | 26 | 0.095 | 15-45 | 1.03 | 37 | 4 | 8.643 | 0.553 | 15.629 | 0.1538 |
| 121 | Hastelloy | granulated/sintered | 29 | 0.578 | 15-45 | 1.04 | 45 | 1 | 2.439 | 0.134 | 18.201 | 0.0345 |
| 122 | Inconel | granulated/ sintered | 27 | 0.161 | 15-45 | 1.05 | 47 | 6 | 10.385 | 0.268 | 38.750 | 0.2222 |
| 123 | Tribaloy | granulated/sintered | 29 | 0.376 | 15-45 | 1.00 | 43 | 10 | 17.647 | 1.347 | 13.101 | 0.3448 |
| 124 | Waspaloy | granulated/sintered | 27 | 0.489 | 15-45 | 1.02 | 42 | 5 | 9.942 | 0.830 | 11.978 | 0.1852 |
| 125 | Maraging steel | granulated/sintered | 32 | 0.156 | 15-45 | 1.03 | 42 | 3 | 6.197 | 0.462 | 13.413 | 0.0938 |
| 126 | Tool steel (AISI4140) | granulated/sintered | 31 | 0.257 | 15-45 | 1.01 | 43 | 3 | 6.487 | 0.294 | 22.065 | 0.0968 |
| 127 | High-speed steel | granulated/sintered | 32 | 0.349 | 15-45 | 1.02 | 45 | 4 | 7.264 | 0.428 | 16.972 | 0.1250 |
| 128 | SUS316L | granulated/sintered | 33 | 0.627 | 15-45 | 1.07 | 41 | 2 | 5.103 | 0.174 | 29.328 | 0.0606 |
| 129 | 6-4 titanium (Ti-6Al-4V) | granulated/sintered | 28 | 0.714 | 15-45 | 1.06 | 48 | 1 | 1.873 | 0.103 | 18.184 | 0.0357 |
| 130 | Pure titanium | granulated/sintered | 34 | 0.723 | 15-45 | 1.01 | 46 | 1 | 2.347 | 0.341 | 6.883 | 0.0294 |
| 131 | Al6061 | granulated/sintered | 26 | 0.257 | 15-45 | 1.09 | 42 | 3 | 5.672 | 0.219 | 25.900 | 0.1154 |
| 132 | Cu | granulated/sintered | 27 | 0.923 | 15-45 | 1.03 | 44 | 8 | 13.137 | 1.827 | 7.190 | 0.2963 |

[Table 4]

[Table 4]

Table 4

| Sample No. | Composition | Production method | Powder material (secondary particles) | | | | | | | | Raw particles (primary particles) | | | | |
|---|---|---|---|---|---|---|---|---|---|---|---|---|---|---|---|
| | | | Average particle diameter (μm) | Specific surface area (m²/g) | Average primary particle diameter (μm) | Particle size range (μm) | Mean roundness | Aspect ratio | Fractal dimension | Angle of repose (deg) | Average particle diameter (μm) | D$_{95}$ (μm) | D$_5$ (μm) | D$_{95}$/D$_5$ | D$_{RAW}$/D$_{POWIDER}$ |
| 37 | Y2O3 | granulated/sintered | 24 | 84.9 | - | - | 1.1 | 1.14 | 1.01 | 34 | 0.01 | - | - | - | - |
| 37-2 | Y2O3 | granulated/sintered | 24 | 84.9 | 0.0138 | 15-45 | 1.1 | 1.14 | 1.01 | 34 | 0.01 | 0.0137 | 0.004 | 3.425 | 0.0004 |
| 133 | ZrO2-8%Y2O3 | granulated/sintered | 29 | | | 15-45 | - | 1.02 | - | 37 | 3 | 7.134 | 0.438 | 16.288 | 0.1034 |
| 134 | Al2O3-4%TiO2 | granulated/sintered | 32 | | | 15-45 | - | 1.03 | - | 42 | 3 | 6.284 | 0.331 | 18.985 | 0.0938 |
| 135 | Al2O3-13%TiO2 | granulated/sintered | 27 | | | 15-45 | - | 1.07 | - | 41 | 3 | 6.583 | 0.499 | 13.192 | 0.1111 |

As shown in Table 1, when the powder material was WC/12 % by mass Co cermet secondary particles, with respect to the powder materials of Samples 1 to 4 of this disclosure, the secondary particles were approximately spherical at large, and thus all had small angles of repose, 31° or smaller, while their average particle diameters ranged from the 10 $\mu$m level to the 100 $\mu$m level. On the other hand, Samples 5 to 8 not satisfying the features of this disclosure had been crushed to have non-spherical shapes and had relatively large angles of repose (34° or larger) as compared to Samples 1 to 4. With the powder materials having a variety of shapes, it has been shown that the powder material disclosed herein has improved fluidity. It is also noted that with respect to Samples 101 to 102 with varied powder compositions, due to the differences in specific gravity and so on, they were found to have varied angles of repose; however, they all showed good fluidity with an angle of repose of 34° or smaller.

As shown in Table 2, when the powder material was a granulated sintered powder formed of $Al_2O_3$ ceramic, similarly to the cermets in Table 1, the powder materials of Samples 9 to 17 satisfying the features of this disclosure were found to have a level of fluidity suited for practical use, having an angle of repose of 34° or smaller or a flow function of 5.6 or greater. On the other hand, with respect to Samples 18 to 32 not satisfying the features of this disclosure, the melted/crushed powders all had an angle of repose of 35° or larger and the PEG-coated powder had a flow function of 5.4; although made of the same materials, they were found inferior in fluidity to Samples 9 to 17.

With respect to the microparticle-coated powders (nanoparticle-bearing powders) of Samples 16 to 17 and 114 to 118, the average particle diameters of the core particles are approximately equal to the average particle diameters of the corresponding powder materials. Their fluidity all improved when compared to the fluidity of the melted/crushed powders with similar average particle diameters. That is, the microparticle-coated powder of Samples 16 has the same average particle diameter as the PEG-coated powder of Sample 33; however, as for the flow function, Samples 16 had high values (5.6 to 5.7) while Sample 33 had a low value (5.4), confirming the increased fluidity of Samples 16. As for the microparticle-coated powders of Sample 115 and 116, the average particle diameters are approximately equal to those of the melted/crushed powders of Samples 22 to 24. Here, Samples 115 and 116 had angles of repose of 35° to 36° while Samples 22 to 24 had large angles of repose (35° to 47°), indicating the increased fluidity of Samples 115 and 116. From the results of Samples 17 and 114 to 118, it has been found that a change in amount of microparticles coating the core particles does not significantly affect the fluidity. For instance, this indicates that it is sufficient to coat the core particles with about 500 ppm to 2000 ppm of microparticles.

As shown in Table 3, when the powder material was NiCr alloy secondary particles, the powder materials of Samples 35 and 36 formed of secondary particles satisfying the features of this disclosure were found to have a level of fluidity suited for practical use as compared to Sample 34 formed of one type of particles that do not satisfy the features of this disclosure. The powder materials of Samples 35 and 36 are primarily formed of secondary particles and thus have large specific surface areas as compared to the powder material of Sample 34. Thus, in comparison with the powder material of Sample 34, it has been confirmed that, the powder materials of Samples 35 and 36 melt when heated for short time and can form an object in a short time as well. With respect to the powder materials formed of metals that satisfy the features of this disclosure, good fluidity was obtained not only with NiCr alloys (in terms of composition), but also with stellite, CoNiCrAlY alloy, hastelloy, inconel, tribaloy, Ni-Co-based alloys such as waspaloy, low carbon steels such as maraging steel, tool steels such as AISI4140, high-speed steels, and stainless steels such as SUS316L. These powder materials had specific surface areas of 0.05 m$^2$/g or greater (e.g. 0.1 m$^2$/g or greater, even 0.3 m$^2$/g or greater) and when used as 3D molding materials, they melted when heated only for short time periods. In other words, it has been shown that objects can be formed with less energy.

As shown in Table 4, with respect to the powder material of Sample 37, although the raw particles were formed of $Y_2O_3$ ceramic particles as fine as 10 nm, the secondary particles formed of the raw particles showed a level of fluidity suited for practical use. As Samples 133 to 135 indicate, different compositions of ceramic particles can be mixed to form a powder material and the art disclosed herein allows for flexible and facile preparation of powders having various compositions.

Powder additive manufacturing was then carried out with Samples 1 to 8, 9, 10, 15, 18, 19, 32 and 34 to 36. The sample numbers correspond to the sample numbers shown in Tables 1, 2 and 3. The samples used in the powder additive manufacturing are identical to these. Powder additive manufacturing was performed with the samples listed above and the resulting 3D objects were evaluated. The results are shown in Tables 5, 6 and 7. The symbol "-" in Tables 5, 6 and 7 indicates that the corresponding 3D object was not evaluated because powder additive manufacturing was not carried out due to the poor fluidity of the powder material. The following describes the measurement methods for the evaluations shown in Tables 5, 6 and 7 as well as the powder additive manufacturing methods.

[Laser Metal Deposition (LMD)]

From the resulting powder materials, 3D objects were obtained by laser powder deposition (a powder additive manufacturing technique). In particular, while supplying argon (Ar) shielding gas, each powder material was subjected to a laser powder deposition process on an SS400 steel plate substrate (50 mm × 70 mm × 10 mm) irradiated with an LD-pumped YAG laser to form an approximately 10 mm thick deposit (layered body) as a 3D object on the substrate. As the laser oscillator, was used a disk laser oscillator (TRUDISK-4006 available from Trumpf) capable of emitting a solid-state laser and a diode laser. The process was carried out at a laser focus of about 2.0 mm diameter at a laser output of about 500 W at a deposition rate of 1000 mm/min. In Tables 5, 6 and 7, "LMD" in the columns headed "Method" indicates that the particular sample was used to fabricate a 3D object by laser powder deposition.

[Selective Laser Melting (SLM)]

From the resulting powder materials, 3D objects were obtained by selective laser melting (a powder additive manufacturing technique). The objects were formed, using a laser sintering powder additive manufacturing system (EOSINT-M250 available from EOS, Germany). In particular, each powder material was supplied to the building area and flattened with the wiper included in the system to form a thin layer (40 $\mu$m). The thin layer formed of the powder material was irradiated with a YAG laser to form a 3D object (a single layer). The steps of supplying and flattening the powder material and the step of subjecting the resultant to laser irradiation were repeated to form a multi-layer body (250 layers, approximately 100 mm $\times$ 100 mm $\times$ 10 mm) as a 3D object. The process was carried out at a laser focus of 150 $\mu$m diameter at a laser output of about 400 W at room temperature; the atmosphere around the powder material was argon. In Tables 5, 6 and 7, "SLM" in the columns headed "Method" indicates that the particular sample was used to fabricate a 3D object by selective laser melting.

[Electron Beam Melting (EBM)]

From the resulting powder materials, 3D objects were obtained by electron beam melting (a powder additive manufacturing technique). The objects were formed, using a 3D electron beam additive manufacturing system (Q10 available from ARCAM AB). In particular, each powder material was supplied to the building area and flattened with the wiper included in the system to form a thin layer (150 $\mu$m). The thin layer formed of the powder material was irradiated with an electron beam to form a 3D object (a single layer). The steps of supplying and flattening the powder material and the step of subjecting the resultant to electron beam irradiation were repeated to form a multi-layer body (67 layers, approximately 100 mm $\times$ 100 mm $\times$ 10 mm) as a 3D object. The process was carried out at a laser focus of 0.2 mm diameter; at a laser output of about 500 W for the powder materials of WC/12 % by mass Co, about 800 W for NiCr, and about 2000 W for $Al_2O_3$; at room temperature; the atmosphere around the powder material was brought to high vacuum and then filled with He. In Tables 5, 6 and 7, "EBM" in the columns headed "Method" indicates that the particular sample was used to fabricate a 3D object by electron beam melting.

[Hardness]

As an index to evaluate the finish of the resulting 3D objects, hardness was measured for the 3D objects. The hardness was measured based on the Vickers harness test method specified in JIS Z 2244:2009 and JIS R1610:2003. In particular, using a micro hardness tester (HMV-1 available from Shimadzu Corporation), Vickers hardness (Hv 0.2) was determined from the indentation marks resulted when a test load of 1.96 N was applied on the surfaces of the 3D objects by a diamond indenter having an apical angle of 136°. Vickers hardness (Hv 0.2) was determined in the same manner with respect to the surfaces of bulk bodies made of the same powder materials as those used in fabricating the 3D objects. The hardness ratios were determined based on the equation shown below. The resulting hardness ratios of the 3D objects are shown in the columns headed "Hardness" in Tables 5, 6 and 7. In particular, "E" (excellent) was given when the Vickers hardness was 1 or greater; "G" (good) when 0.95 or greater, but less than 1; "M" (mediocre) when 0.90 or greater, but less than 0.95; and "P" (poor) when less than 0.90.

$$\text{Hardness ratio} = (\text{Vickers hardness of 3D object})/(\text{Vickers hardness of bulk body})$$

[Surface roughness]

As an index to evaluate the finish of the resulting 3D objects, surface roughness was measured for the 3D objects. For the surface roughness, the surfaces of the respective 3D objects were subjected to measurement based on JIS B 0601:2001 to determine the arithmetic mean roughness Ra. The results of the surface roughness measurement for the 3D objects are shown in the columns headed "Ra" in Tables 5, 6 and 7. In particular, "E" (excellent) was given when the surface roughness was 50 $\mu$m or less; "G" (good) when greater than 50 $\mu$m, but 80 $\mu$m or less; "M" (mediocre) when greater than 80 $\mu$m, but 100 $\mu$m or less; and "P" (poor) when greater than 100 $\mu$m.

[Porosity]

As an index to evaluate the finish of the resulting 3D objects, porosity was measured for the 3D objects. The porosity was determined by subjecting cross sections of the respective 3D objects to image analysis. In particular, in this embodiment, as the image analysis software, IMAGE-PRO (available from Media Cybernetics) was used. The measurement results of porosity of the 3D objects are shown in the columns headed "Porosity" in Tables 5, 6 and 7. "E" (excellent) was given when the porosity was 1 % or lower; "G" (good) when higher than 1 %, but 10 % or lower; "M" (mediocre) when higher than 10 %, but 20 % or lower; and "P" (poor) when higher than 20 %.

In tables 5-7, only samples with production method of "granulated/sintered" are inventive samples, while all other samples produced with other production methods; namely "sintered/crushed", "melted/crushed" and atomized" are reference samples.

[Table 5]

Table 5

| Sample No. | Secondary particles | | | Molding Method | 3D Object | | |
|---|---|---|---|---|---|---|---|
| | Composition | Form | Angle of repose (deg) | | Hardness | Ra | Porosity |
| 1 | WC/Co | granulated/sintered | 28 | LMD | G | M | M |
| 2 | WC/Co | granulated/sintered | 28 | LMD | G | M | M |
| | | | | EBM | G | M | M |
| | | | | SLM | M | G | G |
| 3 | WC/Co | granulated/sintered | 30 | LMD | G | G | M |
| | | | | EBM | G | G | G |
| | | | | SLM | G | G | G |
| 4 | WC/Co | granulated/sintered | 31 | SLM | E | E | E |
| 5 | WC/Co | sintered/crushed | 34 | LMD | M | P | P |
| 6 | WC/Co | sinteredlcmshed | 39 | LMD | - | - | - |
| | | | | EBM | M | P | P |
| | | | | SLM | - | - | - |
| 7 | WC/Co | sinteredlcrushed | 42 | LMD | - | - | |
| | | | | EBM | - | - | - |
| | | | | SLM | P | M | P |
| 8 | WC/Co | sintered/crushed | 46 | SLM | - | - | - |

[Table 6]

Table 6

| Sample No. | Secondary particles | | | Molding Method | 3D Object | | |
|---|---|---|---|---|---|---|---|
| | Composition | Form | Angle of repose (deg) | | Hardness | Ra | Porosity |
| 9 | $Al_2O_3$ | granulated/sintered | 30 | LMD | G | M | M |
| | | | | EBM | M | M | M |
| | | | | SLM | M | M | M |
| 10 | $Al_2O_3$ | granulated/sintered | 32 | LMD | G | M | M |
| | | | | EBM | G | M | M |
| | | | | SLM | G | G | G |
| 15 | $Al_2O_3$ | granulated/sintered | 33 | SLM | E | E | E |

(continued)

| Sample No. | Secondary particles | | | Molding Method | 3D Object | | |
|---|---|---|---|---|---|---|---|
| | Composition | Form | Angle of repose (deg) | | Hardness | Ra | Porosity |
| 18 | $Al_2O_3$ | melted/crushed | 40 | LMD | - | - | - |
| | | | | EBM | - | - | - |
| | | | | SLM | - | - | - |
| 19 | $Al_2O_3$ | melted/crushed | 46 | LMD | - | - | - |
| | | | | EBM | - | - | - |
| | | | | SLM | P | P | P |
| 32 | $Al_2O_3$ | melted/crushed | 57 | SLM | - | - | - |

[Table 7]

Table 7

| Sample No. | Secondary particles | | | Molding Method | 3D Object | | |
|---|---|---|---|---|---|---|---|
| | Composition | Form | Angle of repose (deg) | | Hardness | Ra | Porosity |
| 34 | NiCr | atomized | 57 | SLM | - | - | - |
| 35 | NiCr | granulated/sintered | 45 | SLM | M | M | M |
| 36 | NiCr | granulated/sintered | 37 | SLM | G | G | G |

As shown in Tables 5, 6 and 7, with respect to the hardness, surface roughness and porosity, the 3D objects fabricated with the powder materials of Samples 1 to 4, 9, 10, 15, 35 and 36 satisfying the features of this disclosure were superior to the 3D objects fabricated with the powder materials of Samples 5 to 8, 18, 19, 32 and 34 not satisfying the features of this disclosure. In summary, it has been shown that a well-finished 3D object can be fabricated by using a highly fluid powder material that satisfies the features of this disclosure.

[Reference Signs List]

10 building area
11 wiper
12 powder material stock
13 means of solidifying powder material
14 up-down table
20 powder material layer
21 solidified powder layer

**Claims**

1. A powder material for powder additive manufacturing,
the powder material having a flow function of 5.5 or greater and comprising:

particles having a form of secondary particles, the secondary particles formed with primary particles bound three-dimensionally with interspaces, wherein
the secondary particles are granulated sintered particles obtainable by spherical granulation and sintering of the primary particles, wherein
the powder material is formed of at least one species of material selected from the group consisting of metal materials, ceramic materials and cermets, wherein

the secondary particles account for 90 % by mass or more of the powder material, wherein
the powder material may comprise particles having other forms besides that of the secondary particles, wherein
purities of the primary and secondary particles are preferably 95 % by mass or higher, wherein
the powder material may further include transition metals and elements such as Na, K and Rb, wherein
the flow function is determined by analyzing the powder material as specified in the description,
wherein the remainder of the powder material is constituted of inevitable impurities and additives,
wherein the secondary particles have an average particle diameter of 1 $\mu$m or larger and 100 $\mu$m or smaller, wherein
the average particle diameter is the 50th percentile particle diameter in its size distribution by volume measured by a particle size analyzer based on laser diffraction/scattering spectroscopy,
wherein the compressive strength of the secondary particles forming the powder material is in a range from 1 MPa to 1000 MPa, wherein
the compressive strength values are determined by measuring 10 secondary particles for each powder material using a micro compression tester MCTE·500 and determining the arithmetic mean value of the resulting compressive strength values, wherein
the compressive strength $\sigma$ in MPa is determined by equation (2)

$$\sigma = 2.8 \times L/\pi/d^2 \qquad (2)$$

wherein L is the critical load in N and d is the average secondary particle diameter in mm.

2. The powder material according to claim 1, wherein the primary particles have an average particle diameter of 1 nm or larger, but 10 nm or smaller, wherein

the average particle diameter is the value determined as the diameter of spherical particles, wherein
when the powder material has a total specific surface area Sm and a density $\rho$, the average particle diameter Dave of the primary particles is determined based on equation (1)

$$Dave = 6/(\rho \cdot Sm) \qquad (1),$$

wherein when the powder material is produced from a mixture of several species of raw particles, for the density, the sum of the densities of the several secondary materials added in accordance with their proportions is used.

3. The powder material according to claim 1 having an angle of repose smaller than 39°, wherein

the angle of repose is determined from the diameter and height of a cone of deposits formed when a powder material is dropped through a funnel at a certain height onto a horizontal base plate,
wherein the angle of repose is determined according to JIS R 9301-2-2:1999.

4. The powder material according to claim 1 having a mean roundness of less than 1.5, wherein

the roundness of a powder material means the arithmetic mean roundness value determined with respect to plan view images of 100 or more secondary particles obtained by analytical means such as an electron microscope, wherein in a plan view image of a secondary particle, the roundness is the value defined with the perimeter of the secondary particle and the surface area inside the perimeter by equation (3)

$$Roundness = perimeter^2 \div (4 \times \pi \times surface\ area) \qquad (3).$$

5. A powder additive manufacturing method using the powder material according to any one of claims 1 to 4.

**Patentansprüche**

1. Pulvermaterial für additive Fertigung mit Pulver,
wobei das Pulvermaterial einen Durchflusskoeffizienten von 5,5 oder mehr hat und umfasst:

Teilchen, die eine Form sekundärer Teilchen haben, wobei die sekundären Teilchen durch primäre Teilchen gebildet werden, die mit Zwischenräumen dreidimensional verbunden sind, und wobei

die sekundären Teilchen gekörnte Sinterteilchen sind, die mittels sphärischer Granulation und Sintern der primären Teilchen gewonnen werden können, wobei

das Pulvermaterial aus wenigstens einer Art Material besteht, das aus der Gruppe ausgewählt wird, die aus metallischen Materialien, keramischen Materialien sowie metallkeramischen Materialien besteht, und wobei

die sekundären Teilchen 90 Masse-% oder mehr des Pulvermaterials ausmachen, wobei

das Pulvermaterial Teilchen mit anderen Formen neben denen der sekundären Teilchen umfassen kann, und wobei

Reinheitsgrade der primären und der sekundären Teilchen vorzugsweise 95 Masse-% oder mehr betragen, wobei

das Pulvermaterial des Weiteren Übergangsmetalle und Elemente, wie beispielsweise Na, K und Rb, enthalten kann, und wobei

der Durchflusskoeffizient bestimmt wird, indem das Pulvermaterial wie in der Beschreibung vorgegeben analysiert wird,

wobei der Rest des Pulvermaterials durch unvermeidbare Verunreinigungen und Zusatzstoffe gebildet wird,

wobei die sekundären Teilchen einen durchschnittlichen Teilchendurchmesser von 1 $\mu$m oder größer und 100 $\mu$m oder kleiner haben, und wobei

der durchschnittliche Teilchendurchmesser der Teilchendurchmesser des 50. Perzentils in seiner Größenverteilung nach Volumen, gemessen mit einem Teilchengrößenanalysator mittels Laserbeugungs-/-streuungsspektroskopie, ist,

wobei die Druckfestigkeit der das Pulvermaterial bildenden sekundären Teilchen in einem Bereich von 1 MPa bis 1.000 Mpa liegt, und wobei

die Druckfestigkeits-Werte bestimmt werden, indem zehn sekundäre Teilchen für jedes Pulvermaterial unter Verwendung eines Mikro-Kompressionsdruckmessers MCTE·500 gemessen werden und der arithmetische Mittelwert der resultierenden Druckfestigkeits-Werte bestimmt wird, wobei

die Druckfestigkeit $\sigma$ in MPa mittels Gleichung (2) bestimmt wird:

$$\sigma = 2{,}8 \times L/\pi/d^2 \qquad (2)$$

wobei L die kritische Last in N ist und d der durchschnittliche Durchmesser der sekundären Teilchen in mm ist.

2. Pulvermaterial nach Anspruch 1, wobei die primären Teilchen einen durchschnittlichen Teilchendurchmesser von 1 nm oder mehr, jedoch 10 nm oder weniger haben, und wobei

der durchschnittliche Teilchendurchmesser der Wert ist, der als der Durchmesser sphärischer Teilchen bestimmt wird, wobei

wenn das Pulvermaterial eine spezifische Gesamt-Oberfläche Sm sowie eine Dichte $\rho$ hat, der durchschnittliche Teilchendurchmesser Dave der primären Teilchen auf Basis von Gleichung (1) bestimmt wird:

$$Dave = 6/(\rho \cdot Sm) \qquad (1),$$

wobei, wenn das Pulvermaterial aus einem Gemisch aus verschiedenen Arten unbearbeiteter Teilchen erzeugt wird, für die Dichte die Summe der Dichten der verschiedenen sekundären Teilchen, addiert nach ihren Anteilen, verwendet wird.

3. Pulvermaterial nach Anspruch 1, das einen Schüttwinkel von weniger als 39° hat, wobei

der Schüttwinkel anhand des Durchmessers und der Höhe eines Kegels von Ablagerungen bestimmt wird, der ausgebildet wird, wenn das Pulvermaterial durch einen Trichter in einer bestimmten Höhe auf eine horizontale Grundplatte fallengelassen wird,

wobei der Schüttwinkel nach JIS R 9301-2-2:1999 bestimmt wird.

4. Pulvermaterial nach Anspruch 1, das eine mittlere Rundheit von weniger als 1,5 hat, wobei

die Rundheit eines Pulvermaterials einen arithmetischen Rundheits-Mittelwert angibt, der in Bezug auf Draufsichtbilder von 100 oder mehr sekundären Teichen bestimmt wird, die mit Analyseeinrichtungen, wie beispielsweise einem Elektronenmikroskop, gewonnen werden,

wobei in einem Draufsichtbild eines sekundären Teilchens die Rundheit der Wert ist, der mittels des Umfangs des sekundären Teilchens sowie der Oberfläche im Inneren des Umfangs anhand von Gleichung (3) definiert wird:

$$\text{Rundheit} = \text{Umfang}^2 \div (4 \times \pi \times \text{Oberfläche}) \qquad (3).$$

5. Verfahren für additive Fertigung mit Pulver, bei dem das Pulvermaterial nach einem der Ansprüche 1 bis 4 eingesetzt wird.

**Revendications**

1. Matériau en poudre pour fabrication additive à partir de poudres, le matériau en poudre ayant une fonction d'écoulement de 5,5 ou plus et comprenant :

des particules ayant une forme de particules secondaires, les particules secondaires étant formées à partir de particules primaires limitées tridimensionnellement par des espaces intermédiaires, dans lequel
les particules secondaires sont des particules frittées granulées que l'on peut obtenir par granulation sphérique et frittage des particules primaires, dans lequel
le matériau en poudre est formé d'au moins une espèce de matériau choisie dans le groupe constitué par des matériaux métalliques, des matériaux céramiques et des cermets, dans lequel
les particules secondaires représentent 90 % en masse ou plus du matériau en poudre, dans lequel
le matériau en poudre peut comprendre des particules ayant d'autres formes que celle des particules secondaires, dans lequel
les puretés des particules primaires et secondaires sont de préférence supérieures ou égales à 95 % en masse, dans lequel
le matériau en poudre peut en outre comporter des métaux de transition et des éléments tels que Na, K et Rb, dans lequel
la fonction d'écoulement est déterminée par analyse du matériau en poudre comme indiqué dans la description, dans lequel le reste du matériau en poudre est constitué d'impuretés inévitables et d'additifs,
dans lequel les particules secondaires ont un diamètre moyen de particule de 1 $\mu$m ou plus et 100 $\mu$m ou moins, dans lequel
le diamètre moyen de particule est le diamètre de particule du 50$^e$ percentile dans sa distribution granulométrique par volume mesurée par un analyseur de granulométrie fondé sur la spectroscopie de diffraction/diffusion laser, dans lequel la résistance en compression des particules secondaires formant le matériau en poudre est dans une plage de 1 MPa à 1 000 MPa, dans lequel
les valeurs de résistance en compression sont déterminées par mesurage de 10 particules secondaires pour chaque matériau en poudre à l'aide d'un appareil d'essai de micro-compression MCTE•500 et détermination de la valeur moyenne arithmétique des valeurs de résistance en compression résultantes, dans lequel
la résistance en compression $\sigma$ en MPa est déterminée par l'équation (2)

$$\sigma = 2{,}8 \times L/\pi/d^2 \qquad (2)$$

dans laquelle L est la charge critique en Newtons et d est le diamètre moyen de particule secondaire en millimètres.

2. Matériau en poudre selon la revendication 1, dans lequel les particules secondaires ont un diamètre moyen de particule de 1 nm ou plus, mais 10 nm ou moins, dans lequel

le diamètre moyen de particule est la valeur déterminée en tant que diamètre de particules sphériques, dans lequel
lorsque le matériau en poudre a une surface spécifique totale Sm et une masse volumique $\rho$, le diamètre moyen de particule Dave des particules primaires est déterminé sur la base de l'équation (1)

$$\text{Dave} = 6/(\rho \cdot \text{Sm}) \qquad (1),$$

dans laquelle, quand le matériau en poudre est produit à partir d'un mélange de plusieurs espèces de particules de départ, en ce qui concerne la masse volumique, on utilise la somme des masses volumiques des plusieurs matériaux secondaires additionnées conformément à leurs proportions.

3. Matériau en poudre selon la revendication 1 ayant un angle de talus inférieur à 39°, dans lequel

on détermine l'angle de talus à partir du diamètre et de la hauteur d'un cône de dépôts formé quand on fait tomber un matériau en poudre à travers un entonnoir à une certaine hauteur sur une plaque de base horizontale, dans lequel l'angle de talus est déterminé conformément à la norme JIS R 9301-2-2:1999.

4. Matériau en poudre selon la revendication 1 ayant une rondeur inférieure à 1,5, dans lequel

la rondeur d'un matériau en poudre désigne la valeur moyenne arithmétique de rondeur déterminée par rapport à des images de vue en plan de 100 particules secondaires ou plus obtenues par un moyen analytique tel qu'un microscope électronique, dans lequel sur une image de vue en plan d'une particule secondaire, la rondeur est la valeur définie à partir du périmètre de la particule secondaire et de l'aire à l'intérieur du périmètre au moyen de l'équation (3)

$$\text{Rondeur} = \text{périmètre}^2 / (4 \times \pi \times \text{aire}) \quad (3).$$

5. Procédé de fabrication additive à partir de poudres qui utilise le matériau en poudre selon l'une quelconque des revendications 1 à 4.

[Fig. 1]

FIG.1

[Fig. 2]

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014127767 A
- JP 2003245981 A
- JP H6218712 B
- JP 2001152204 A
- JP 2004277877 A
- JP 2006321711 A
- JP 2008050671 A
- US 2009321971 A1
- CN 103785860 A
- WO 2015001241 A2
- US 2013040065 A1
- WO 2013176058 A1
- JP 2008231527 A
- US 7700060 B2

### Non-patent literature cited in the description

- **Y. XIONG et al.** *Processing and Microstructure of WC-Co Cermets by Laser Engineered Net Sharping*, 10 September 2008
- New Development in Nanoparticles and Ultrafine Particles. Toray Research Center, Inc.
- Practical Applications of Ultrafine Polymer Particles. CMC
- Techniques and Applications of Polymeric Microparticles. CMC